(19) Europäisches Patentamt

European Patent Office

Office européen des brevets

(11) **EP 0 891 680 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **97921601.7**

(22) Anmeldetag: **03.04.1997**

(51) Int Cl.⁷: **H04Q 7/38**, H04Q 7/24

(86) Internationale Anmeldenummer:
**PCT/DE97/00688**

(87) Internationale Veröffentlichungsnummer:
**WO 97/038545 (16.10.1997 Gazette 1997/44)**

(54) **ZUWEISUNG VON KANÄLEN UNTERSCHIEDLICHER KAPAZITÄT IN EINEM HYBRIDEN ISDN-DECT TELEKOMMUNIKATIONSSYSTEM**

ASSIGNING CHANNELS OF DIFFERENT CAPACITIES IN A HYBRID ISDN-DECT TELECOMMUNICATIONS SYSTEM

ATTRIBUTION DE CANAUX DE DIFFERENTES CAPACITES DANS UN SYSTEME HYBRIDE DE TELECOMMUNICATIONS RNIS-DECT

(84) Benannte Vertragsstaaten:
**AT BE CH DE ES FR GB IT LI NL SE**

(30) Priorität: **04.04.1996 DE 19613637**
**24.06.1996 DE 19625142**

(43) Veröffentlichungstag der Anmeldung:
**20.01.1999 Patentblatt 1999/03**

(73) Patentinhaber: **SIEMENS AKTIENGESELLSCHAFT**
**80333 München (DE)**

(72) Erfinder:
• **FLAKE, Horst**
**D-82041 Oberhaching (DE)**
• **KORDSMEYER, Martin**
**D-48477 Hörstel (DE)**

(56) Entgegenhaltungen:
**WO-A-93/21719**

• **PILGER U: "STRUKTUR DES DECT-STANDARDS" NACHRICHTENTECHNIK ELEKTRONIK, Bd. 42, Nr. 1, 1.Januar 1992, Seiten 23-29, XP000279214 in der Anmeldung erwähnt**

EP 0 891 680 B1

**Beschreibung**

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen

1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht

(1) in Form eines Bildes,
(2) als gesprochenes Wort,
(3) als geschriebenes Wort,
(4) als verschlüsseltes Wort oder Bild

übertragen werden. Die Übertragungsart gemäß (1) ...(3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.
Ausgehend von dieser allgemeinen Definition eines Nachrichtensystems bezieht sich die Erfindung auf Verfahren zum Zuweisen von Telekommunikationskanälen unterschiedlicher Kanalkapazität in einem hybriden Telekommunikationssystem, insbesondere einem "ISDN ↔ DECT-spezifischen RLL/WLL"-System (**R**adio **L**ocal **L**oop/**W**ireless **L**ocal **L**oop) - gemäß dem Oberbegriff des Patentanspruches 1.
Hybride Telekommunikationssysteme sind z. B. unterschiedliche - drahtlose und/oder drahtgebundene - Telekommunikationsteilsysteme enthaltende Nachrichtensysteme.

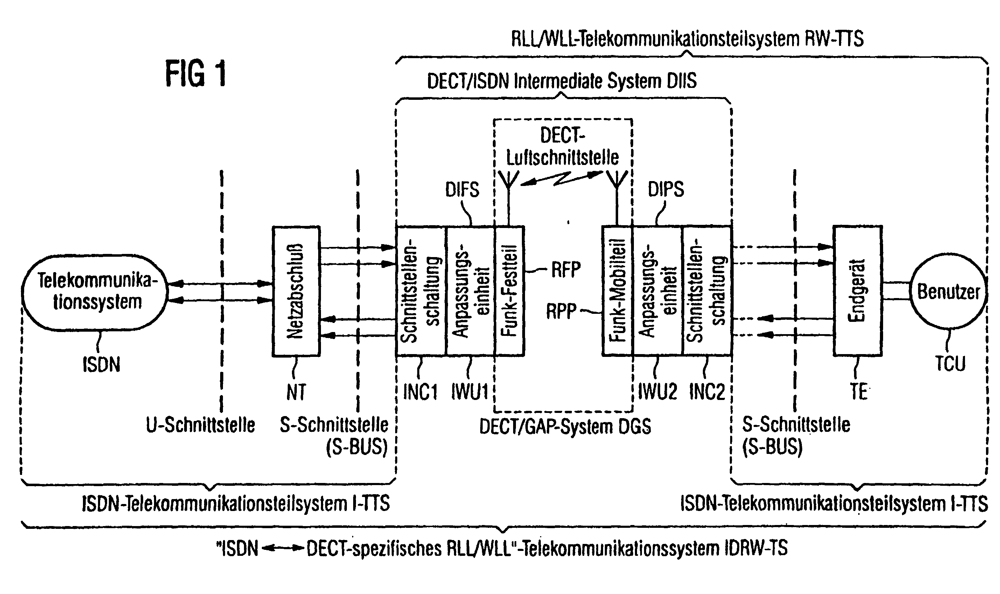

FIGUR 1 zeigt - stellvertretend für die Vielzahl der hybriden Telekommunikationssysteme - ausgehend von den Druckschriften *"Nachrichtentechnik Elektronik, Berlin 45 (1995) Heft 1, Seiten 21 bis 23 und Heft 3 Seiten 29 und 30"* sowie IEE Colloquium 1993, 173; (1993), *Selten 29/1 - 29/7; W.Hing, F.Halsall:"Cordless access to the ISDN basic rate Service"* auf der Basis eines **D**ECT/**I**SDN **I**ntermediate **S**ystems DIIS gemäß der *ETSI-Publikation prETS 300xxx, Version 1.10, September 1996* ein **"I**SDN ↔ **D**ECT-spezifisches **R**LL/**W**LL"-**T**elekommunikations**s**ystem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS [*vgl. Druckschrift "Nachrichtentechnik Elektronik, Berlin 41-43, **T**eil: 1 bis 10, **T**1: (1991) Heft 3, Seiten 99 bis 102; **T**2: (1991) Heft 4, Selten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Selten 19 bis 20; **T**5: (1992) Heft 2, Seiten 59 bis 62 und (1992) Heft 3, Seiten 99 bis 102; **T**6: (1992) Heft 4, Selten 150 bis 153; **T**7: (1992) Heft 6, Selten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;"*] und einem DECT-spezifischen **R**LL/**W**LL-**T**elekommunikations**t**eil**s**ystem RW-TTS.
Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS [**D**igital **E**nhanced (früher: **E**uropean) **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3):** tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5):** WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*
Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann:"Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z.B. bei dem RLL/WLL-Telekommunikationsteilsystems RW-TTS die drahtlose Anschlußtechnik RLL/WLL (**R**adio in the **L**ocal **L**oop/ **W**ireless in the **L**ocal **L**oop) z.B. unter der Einbindung des DECT-System DS dem ISDN-Teilnehmer ISDN-Dienste an Standard-ISDN-Schnittstellen verfügbar gemacht werden (vgl. FIGUR 1).

In dem "ISDN $\leftrightarrow$ DECT-spezifisches RLL/ WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/ WLL-Telekommunikationsteilsystems RW-TTS enthaltene- DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z. B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Für ein DECT-spezifisches RLL-System als Träger für möglichst alle ISDN-Dienste im Teilnehmer-Anschluß bestehen dabei folgende allgemeinen Problemstellungen:

a) Nachbildung der ISDN-Kanal-Struktur (D-Kanal und 2 B-Kanäle), im folgenden insbesondere des D-Kanals,

b) gute Bandbreite-Ökonomie; für ISDN besonders bedeutsam, da einige Dienste bereits zwei DECT-Kanäle für die B-Kanal-Datenrate von 64 kbps benötigen,

c) minimaler technischer Aufwand.

Nachbildung des D-Kanals

Eigenschaften des D-Kanals:

- Gemeinsamer Signalisierungskanal auf der C-Ebene (C-plane) für alle an den ISDN-Anschluß angeschlossenen Endgeräte TE (**T**erminal **E**ndpoint).
- Die TE-spezifischen Signalisierungskanäle zum Netz werden darin durch TE-individuelle Adressen TEI (**T**erminal **E**ndpoint **I**dentifier) separiert. Der Zugriffsmechanismus zum D-Kanal stellt TE-individuell die Reihenfolge der Nachrichten sicher.
- Durchsatzrate: 16 kbps
- Auslastung: abhängig von vielen Kriterien, in der Regel niedriger als Maximalkapazität; Stausituationen möglich, die jedoch wegen der hohen Kapazität schnell abbaubar sind.

DECT-Kanäle:

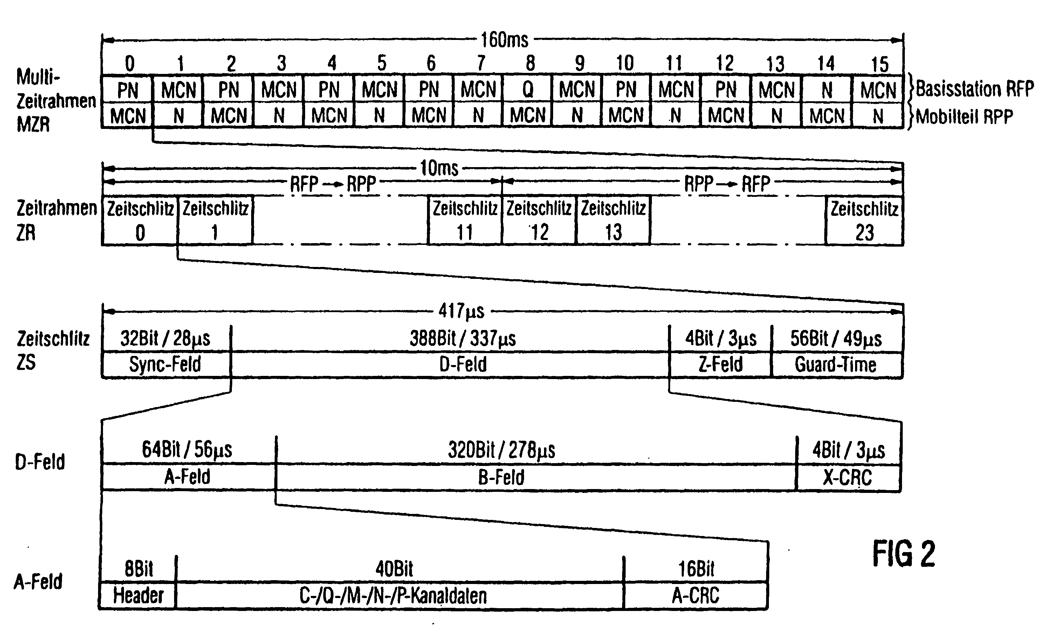

FIGUR 2 zeigt in Anlehnung an die Druckschrift "Nachrichtentechnik Elektronik 42 (1992) Jan./ Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation RFP → Mobilteil RPP" und weitere 12 Zeitschlitze ZS (Zeitschlitze 12 ... 23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Eigenschaften:

-    Verwendung von TDMA-Zeitschlitzen.
-    Im Prinzip wird je Zeitschlitz ein $C_s$-Kanal (s = slow) zur Signalisierung [C-Ebene (C-plane) im DECT-Standard] und ein zugeordneter Kanal [U-Ebene (U-plane) im DECT-Standard] für die Benutzer- bzw. Nutzinformationen (Durchsatz: 32 kbps) verwendet.
-    Durchsatz des $C_s$-Kanals: 2 kbps.

Der DECT-Standard bietet auch andere Kanalstrukturen, z. B. einen $C_f$-Kanal (f = fast) an.

-    Der $C_f$-Kanal belegt einen Zeitschlitz.
-    Durchsatz des $C_f$-Kanals: 25.6 kbps.

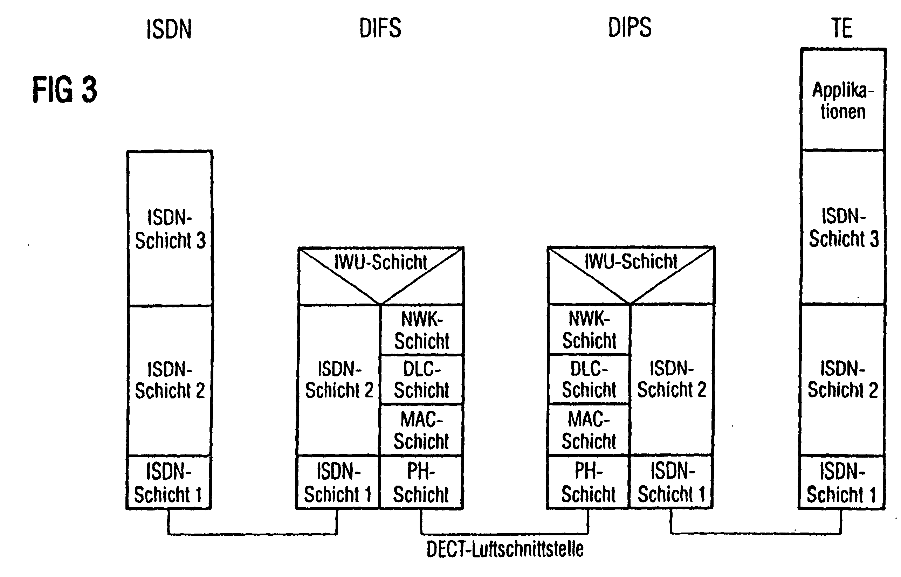

Figur 3 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3):** ETSI-Publikation ETS 300102, Februar 1992; **(4):** ETSI-Publikation ETS 300125, September 1991; **(5):** ETSI-Publikation ETS 300012, April 1992] ein Modell der C-Ebene des "ISDN ↔ DECT-spezifischen RLL/WLL"-Telekommunikationssystems IDRW-TS nach FIGUR 1.

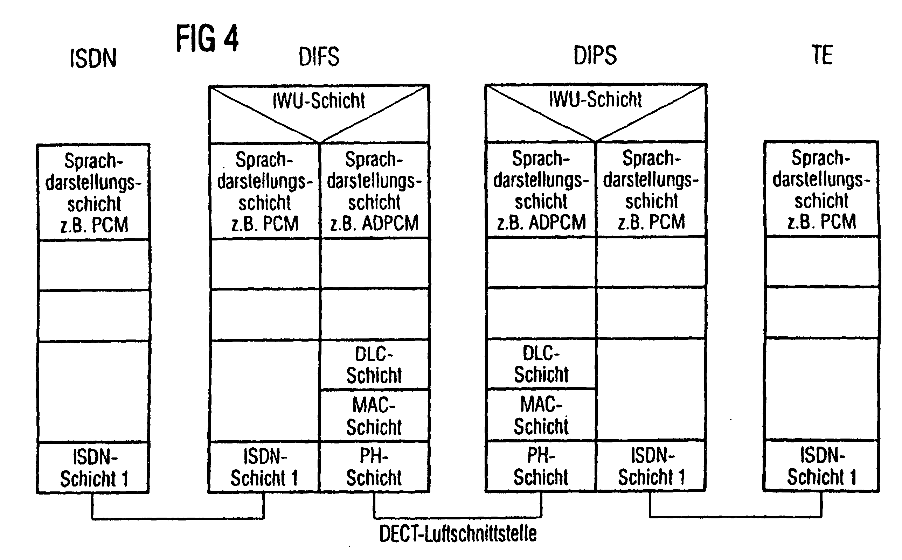

Figur 4 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3):** ETSI-Publikation ETS 300102, Februar 1992; **(4):** ETSI-Publikation ETS 300125, September 1991; **(5):** ETSI-Publikation ETS 300012, April 1992] ein Modell der U-Ebene für Sprachdatenübertragung des "ISDN ↔ DECT-spezifischen        RLL/WLL"-Telekommunikationssystems IDRW-TS nach FIGUR 1.

Bandbreite-Ökonomie

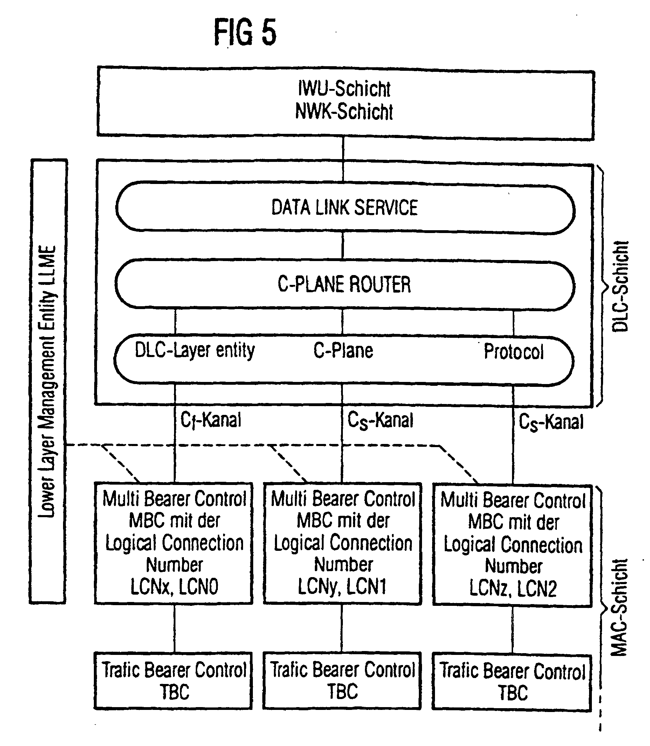

Die $C_s$-Kanalstruktur bietet für eine Standard-Sprachverbindung eine optimale Bandbreite-Ökonomie, da gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) nur ein Übertragungsweg (Bearer) - z.B. MBC mit der LCNy, LCN1 nach FIGUR 5 - bzw. eine Verbindung oder ein Zeitschlitz benötigt wird.

Die Verwendung des $C_f$-Kanals führt gemäß FIGUR 5 ausgehend von FIGUR 3 und 4 sowie unter Berücksichtigung    der    ETSI-Publikationen    (ETS 300175-1, 10/1992, Kap. 7; ETS 300175-3, 10/1992, Kap. 4.1; ETS 300175-4, 10/1992, Kap. 4) zu einer geringerer Bandbreite-Ökonomie, da die U-Ebene (U-plane) selbst einen weiteren Übertragungsweg (Bearer) bzw. eine weitere Verbindung oder einen weiteren Zeitschlitz benötigt; d.h. es sind zwei Übertragungswege (Bearer) - z.B. MBC mit der LCN2,LCNz und MBC mit der LCNy, LCN1 nach FIGUR 5 - bzw. zwei Verbindung oder zwei Zeitschlitze für eine einfache Sprachverbindung notwendig.

Darüber hinaus sind für den Fall, daß zwei ISDN-B-Kanal-Verbindungen    (Sprachverbindungen) bestehen, drei Übertragungswege (Bearer) - z.B. MBC mit der LCNx, LCN0, MBC mit der LCNy, LCN1 und MBC mit der LCNz, LCN2 nach FIGUR 5 - bzw. drei Verbindung oder drei Zeitschlitze erforderlich.

Während aus der Sicht der Kanalkapazität die Verwendung des $C_f$-Kanals zweckmäßig zu sein scheint, ist aus der Sicht der Bandbreite-Ökonomie die Verwendung des $C_s$-Kanals zweckmäßig.

Unabhängig davon, ob der $C_f$-Kanal oder der $C_s$-Kanal für den Verbindungsaufbau (Aufbau von Übertragungswegen) verwendet wird, muß es sichergestellt sein (vgl. FIGUR 5), daß zu jeder Zeit vom $C_f$-Kanal zum $C_s$-Kanal und umgekehrt gewechselt werden kann (Kanalwechsel zwischen Kanälen ungleicher Kanalkapazität). Darüber hinaus muß es aufgrund der Möglichkeit, daß im ISDN-System zwei Verbindungen (Übertrgungswege) gleichzeitig aufgebaut werden können (2 B-Kanäle), sichergestellt sein, daß zwischen einem ersten $C_s$-Kanal und einem zweiten $C_s$-Kanal gewechselt werden kann (Kanalwechsel zwischen zwei Kanälen gleicher Kanalkapazität).

Technische Aufwand

Gegenüber dem ISDN-Teilnehmer und dem ISDN-Netz muß das DECT-spezifische RLL-System transparent erscheinen. Für seine Internfunktionen, wie z. B. DECT-Kanal-Auswahl etc., benötigt es Steuerkriterien, die durch die Analyse von ISDN-"Schicht 2"-/"Schicht 3"-Nachrichten (vgl. Druckschrift "Nachrichtentechnik Elektronik, Berlin 45, **T**2: (1991) Heft 4, Seiten 138 bis 143;") der Signalisierung ISDN-Netz <--> ISDN-Teilnehmer (Terminal Endpoint TE) ermittelt werden müssen, sofern sie nicht an Netzschnittstellen explizit verfügbar sind.

Zur Minimierung des Aufwands ist es möglich, diesen Steuerungskomplex in eine Telekommunikationsschnittstelle der Telekommunikationsschnittstellen DIFS, DIPS, z. B. der ersten Telekommunikationsschnittstelle DIFS (**D**ECT **I**ntermediate **F**ixed **S**ystem), zu konzentrieren und daraus die jeweils andere Telekommunikationsschnittstelle, im vorliegenden Fall die zweite Telekommunikationsschnittstelle DIPS (**D**ECT **I**ntermediate **P**ortable **S**ystem) zu steuern. Der "Fixed System" DIFS hat in dieser Konstellation immer die Möglichkeit, eine dem ISDN-Dienst entsprechende DECT-Kanalstruktur auszuwählen (C-plane und U-plane).

Dies ist beim "Portable System" DIPS ohne direkten Zugriff zum ISDN-"Schicht 3" nicht möglich. Alleine aus der ISDN-"Schicht 2" Funktion kann dieser nicht in allen Situationen eine TE-individuelle Verbindung mit C- und U-plane eindeutig auf eine entsprechende DECT-Kanalstruktur abbilden.

Selbst wenn dieses gelänge, bleibt das Problem des Durchsatzunterschiedes bei ausschließlicher Verwendung des in bezug auf die Bandbreite ökonomischen $C_s$-Kanals.

Gesucht ist somit ein Weg, der bei guter Bandbreite-Ökonomie und geringem Systemaufwand den gesamten D-Kanal eines ISDN-Anschlusses so auf eine DECT-Kanal-Anordnung abbildet, daß die grundsätzlichen Eigenschaften des D-Kanals nicht verändert werden und Stausituationen schnell abgebaut werden können.

Ein bekannter Entwurf zur Standardisierung eines solchen Systems sieht bisher die Verwendung des $C_f$-Kanals vor, solange der ISDN-Anschluß aktiv ist. Die zentrale Steuerfunktion liegt im "Fixed System" DIFS, der das Portable System" DIPS über den $C_f$-Kanal steuert. Diese Lösung ist relativ einfach, hat jedoch den Nachteil der nicht optimalen Bandbreite-Ökonomie.

Die der Erfindung zugrundeliegende Aufgabe besteht darin, in einem hybriden Telekommunikationssystem, insbesondere einem "ISDN ↔ DECT-spezifischen RLL/WLL"-System, Telekommunikationskanäle unterschiedlicher Kanalkapazität, z.B. den ISDN-D-Kanal und DECT-Kanäle, bei einer guten (ökonomischen) Ausnutzung der Bandbreite und minimalem technischen Aufwand gegenseitig zuzuweisen (z.B. Nachbildung der ISDN-Kanalstruktur durch die DECT-Kanalstruktur).

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht darin, in Abhängikeit von der auf dem ISDN-D-Kanal übertragenen Nachrichtenmenge den DECT-spezifischen $C_s$-Kanal und den DECT-spezifischen $C_f$-Kanal für die Nachrichtenübertragung in einem hybriden Telekommunikationssystem zu verwenden. Dabei wird insbesondere der in der Beschreibungseinleitung für hybriden Telekommunikationssysteme, insbesondere einem "ISDN ↔ DECT-spezifischen RLL/WLL"-System, diskutierte technische Sachverhalt im Sinne der der Erfindung zugrundeliegenden Aufgabe berücksichtigt.

Ziel der Lösung ist eine dynamische Anpaßbarkeit der Kapazität einer den D-Kanal tragenden DECT-Kanal-Anordnung an den aktuellen Durchsatzbedarf des D-Kanals bei weitgehender Beibehaltung der Eigenschaften des in Beschreibungseinleitung dargelegten bekannten Standardisierungsentwurfs.

Weitere vorteilhafte Weiterbildungen der Erfindung sind in den Unteransprüchen angegeben.

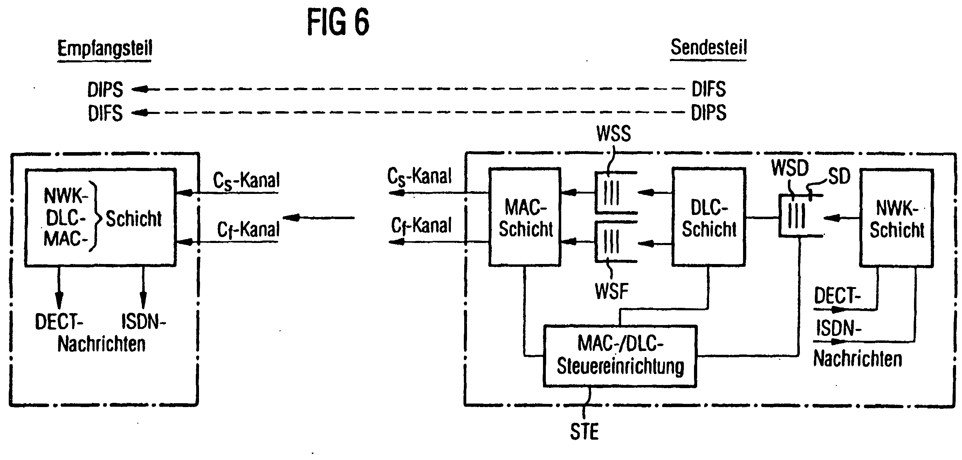

Ein Ausführungsbeispiel der Erfindung wird anhand der FIGUREN 6 bis 15 erläutert.

FIGUR 6 zeigt ausgehend von den FIGUREN 1 bis 5 den prinzipiellen Aufbau eines Sendeteils und Empfangsteils jeweils für die erste Telekommunikationsschnittstelle DIFS und die zweite Telekommunikationsschnittstelle DIPS, der für die Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)" von Bedeutung ist.

In dem Sendeteil der ersten Telekommunikationsschnittstelle DIFS bzw. der zweiten Telekommunikationsschnittstelle DIPS übergibt die NWK-Schicht (**Net**-**WorK**layer) in bekannter Weise ISDN-"Schicht 2"/"Schicht 3"-Informationen und DECT-Steuerinformationen über eine als Speicher ausgebildeten erste Warteschlange WSD an die DLC-Schicht (**D**ata **L**ink **C**ontrol). Eine MAC-/DLC-Steuereinrichtung STE des Sendeteils mißt den Füllgrad in der Warteschlange WSD und stimuliert daraus die MAC-Schicht (**M**edium **A**ccess **C**ontrol) und DLC-Schicht. Solange der Füllgrad unter einer Schwelle SD bleibt, legt die DLC-Schicht die zu übertragende Information (Nachricht) in eine ebenfalls als Speicher ausgebildete zweite Warteschlange WSS ab, aus der sie die MAC-Schicht auf dem $C_s$-Kanal an das Empfangsteil überträgt.

Wenn die Schwelle SD überschritten wird, legt die DLC-Schicht die Information in eine wiederum als Speicher ausgebildete dritte Warteschlange WSF ab, aus der sie die MAC-Schicht auf einem $C_f$-Kanal, der hierfür aufgebaut wird, an das Empfangsteil überträgt. Der $C_s$-Kanal wird wieder verwendet, wenn die erste Warteschlange WSD und die dritte Warteschlange WSF leer sind.

Durch das Sendeteil und/oder das Empfangsteil erkennen/erkennt z.B. die erste Telekommunikationsschnittstelle DIFS und/oder die zweite Telekommunikationsschnittstelle DIPS die Notwendigkeit, einen Kanalwechsel (Wechsel von einem Teilsystemkanal auf einen anderen Teilsystemkanal) herbeizuführen. Das Ergebnis der Analyse bildet dabei den Stimulus für den Kanalwechsel. Der in FIGUR 6 dargestellte Aufbau des Sendeteils und Empfangsteils kann somit für die Steuerung des Kanalwechsels verwendet werden.

Für die sich hieraus ergebenden Kanalwechsel zwischen dem $C_s$-Kanal und dem $C_f$-Kanal wird unterstellt, daß die Zuordnung $C_s$-Kanal <--> $C_f$-Kanal in der ersten Telekommunikationsschnittstelle DIFS und der zweiten Telekommunikationsschnittstelle DIPS unter Verwendung des DECT-Standards bekannt ist. Wie der $C_s$-Kanal so kann natürlich auch der $C_f$-Kanal, sofern dieser bereits existent ist, für Übertragungen in der Gegenrichtung benutzt werden.

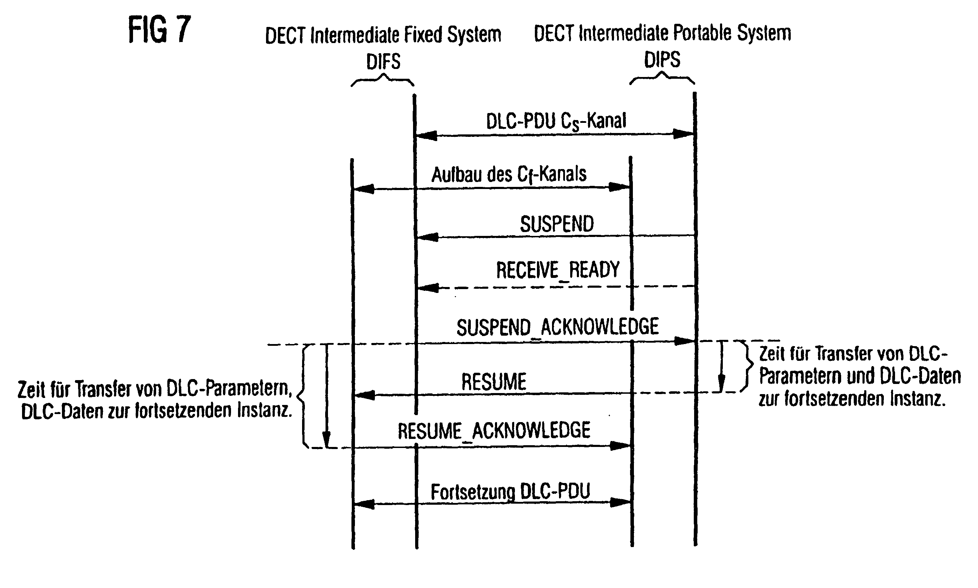

Die FIGUREN 7 bis 10 zeigen eines erstes Ausführungsbeispiel für die Kanalwechsel.

Funktion im einzelnen

Solange der Füllgrad der ersten Warteschlange WSD unter der Schwelle SD liegt, verwendet die DLC-Schicht zur Speisung der zweiten Warteschlange WSS das DECT-A-Feld-Format (DECT-Standard). Nach der Überschreitung der Schwelle SD wird die dritte Warteschlange WSF im DECT-B-Feld-Format gespeist. Die Umschaltung zum Senden aus der dritten Warteschlange WSF erfolgt nach Aufbau des $C_f$-Kanal, wenn die zweite Warteschlange WSS leer ist oder der $C_f$-Kanal bereit ist.

Für den Übergang vom A-Format auf das B-Format gibt es zwei Möglichkeiten:

a) Warteschlange WSS erhält nur komplette A-Feld-DLC-Rahmen:

Die Umschaltung erfolgt dann immer an DLC-Rahmengrenzen. Für die Dimensionierung der DLC-Rahmen gibt es drei Kriterien:

- möglichst kurze Rahmen, damit die Verzögerung der Umschaltung zum Senden aus der dritten Warteschlange WSF möglichst kurz bleibt,
- andererseits steigt der DLC-PDU-Datenüberhang (Data overhead; **P**rotocol **D**ata **U**nit), wenn die maxiamle DLC-Rahmenlänge nicht ausgenutzt wird,
- Überbrückung der Aufbauzeit für den $C_f$-Kanal.

Für die Steuerung der Umschaltung $C_s$-Kanal <--> $C_f$-Kanal werden DLC-Prozeduren (**D**ata **L**ink **C**ontrol) verwendet.

So kommen z.B. die DECT-Standardprozeduren "Class B acknowledged suspension / Class B resumption" in modifizierter Form spezifisch für diese Anwendung (vgl. DECT-Standard ETS 300175-4, Oct. 1992, Kap. 9.2.7) in Frage.

$C_s$**-Kanal** → $C_f$**-Kanal** gemäß FIGUR 7

Wenn die erste Warteschlange WSS leer ist, d. h. der letzte I-Rahmen nach dem HDLC-Protokoll quittiert ist, sendet die initiierende Telekommunikationsschnittstelle DIFS, DIPS (z.B die zweite Telekommunikationsschnittstelle DIPS) einen Befehl "SUSPEND" auf dem $C_s$-Kanal. Falls die Gegenstelle (die erste Telekommunikationsschnittstelle DIFS) selbst noch I-Rahmen aus der ersten Warteschlange WSS zu senden hat, beendet er dies frühestmöglichst an der nächsten Rahmengrenze (restliche Rahmen werden in die dritte Warteschlange WSF übertragen), erwartet die letzte Quittung auf dem $C_s$-Kanal und akzeptiert dann den Befehl "SUSPEND" (Suspension) auf dem $C_s$-Kanal.

Danach initiiert die zweite Telekommunikationsschnittstelle DIPS die Wiederaufnahme (Resumption) der Verbindung (data link) durch einen Befehl "RESUME" auf dem $C_f$-Kanal. Die erste Telekommunikationsschnittstelle DIFS quittiert dies auf dem $C_f$-Kanal. Dann setzen beide Telekommunikationsschnittstellen DIFS, DIPS die Übertragung auf dem $C_f$-Kanal fort.

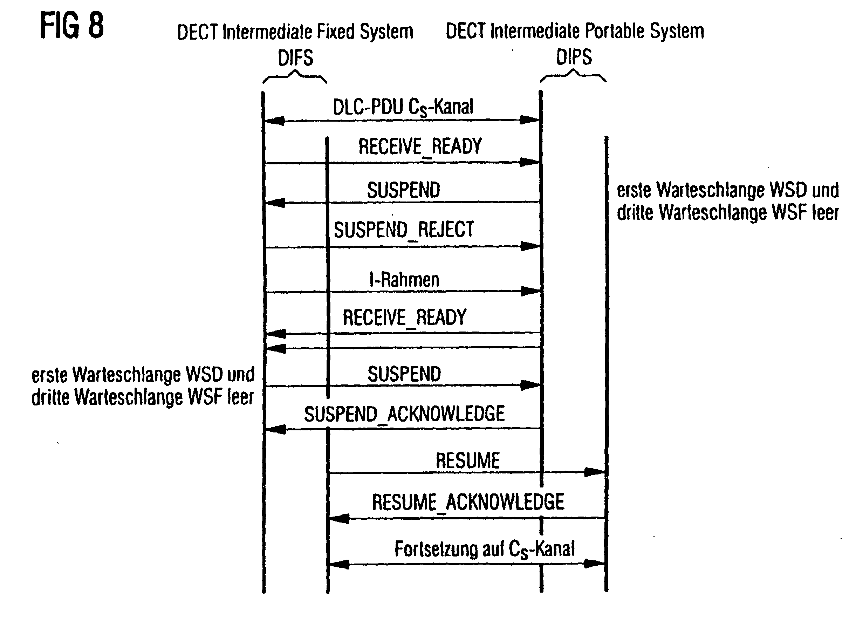

$C_f$**-Kanal** → $C_s$**-Kanal** gemäß FIGUR 8

Die Rückschaltung erfolgt, wenn die erste Warteschlange WSD und die dritte Warteschlange WSF auf beiden Seiten leer sind und der letzte I-Rahmen quittiert ist.

Unterschieden werden dabei zwei Fälle:

Die Bedingung ist zuerst bei der Telekommunikationsschnittstelle erfüllt, die die Umschaltung veranlaßt hat (die zweite Telekommunikationsschnittstelle DIPS).

- die zweite Telekommunikationsschnittstelle DIPS sendet den Befehl "SUSPEND" auf dem $C_f$-Kanal.
- die erste Telekommunikationsschnittstelle DIFS weist den Befehl "SUSPEND" auf dem $C_f$-Kanal zurück und setzt das Senden von Informationen auf dem $C_f$-Kanal fort.
- die erste Telekommunikationsschnittstelle DIFS übernimmt damit in der Folge auch die Initiative zur Umschaltung auf den $C_s$-Kanal und leitet seinerseits die "Suspension/Resumption" ein, wenn der $C_f$-Kanal nicht mehr benötigt wird. In der Zwischenzeit könnte auch die zweite Telekommunikationsschnittstelle DIPS den $C_f$-Kanal bei Bedarf spontan wieder benutzen.

Die Bedingung bei der Telekommunikationsschnittstelle DIFS, DIPS, die vorher die Umschaltung auf den $C_f$-Kanal veranlaßt oder beibehalten hat, wird später erfüllt.

Dieser Fall beendet die Benutzung des $C_f$-Kanals und schaltet auf den $C_s$-Kanal zurück.

Die antwortende Telekommunikationsschnittstelle DIFS, DIPS akzeptiert in diesem Fall die "Suspension" auf dem $C_f$-Kanal. Die suspendierende Telekommunikationsschnittstelle DIFS, DIPS initiiert dann die "Resumption" auf dem $C_s$-Kanal.

b) Umschaltung innerhalb von I-Rahmen

Dieser Ansatz vermeidet den zusätzlichen Datenüberhang (Overhead) für optimale DLC-Rahmen, setzt aber voraus, daß die Umschaltung $C_s$-Kanal <--> $C_f$-Kanal für die DLC-Schicht lückenlos ist und der exakte Umschaltpunkt auch für den Empfanger erkennbar ist.

Die DLC-Schicht im Sendeteil gibt nach Start eines Rahmens in der zweiten Warteschlange WSS eine Rahmenlänge L vor, muß aber damit rechnen, daß innerhalb des Rahmens auf die dritte Warteschlange WSF umzuschalten ist und daß der Rahmen dort im B-Feld-Format abzuschließen ist. Für diesen Fall speichert er L und alle bereits an die zweite Warteschlange WSS übergebenen Daten und kann daraus den Rahmenabschluß (Füll-Oktetts, Prüfsumme) nach B-Feld-Regeln bilden.

Zur Steuerung der für die DLC-Schicht lückenlosen Umschaltung kann eine Erweiterung der bisher standardisierten Funktionen der MAC-Schicht benutzt werden. Diese Erweiterung betrifft das A-Feld wie folgt (s. ETS 300 175-3, 7.2.5 insbesondere 7.2.5.3 ff.).

- Im MAC-Nachrichtenkopf wird eine der noch freien Codepunkte mit dem MAC-Kommandotyp "Um-schaltung $C_s$-Kanal /$C_f$-Kanal" belegt.
- Der Rest des A-Feldes enthält unter diesem Kommando im wesentlichen folgende Informationen:
- Referenz der MAC-Verbidungen, zwischen denen die $C_s$-Kanal / $C_f$-Kanal -Umschaltung erfolgen soll (verwendet wird die bereits definierte ECN; **E**xchanged **C**onnection **N**umber).
- Spezifische Umschaltkommando $C_s$-Kanal --> $C_f$-Kanal / $C_f$-Kanal --> $C_s$-Kanal.
- Quittung: Umschaltung akzeptiert/nicht akzeptiert, Bestätigung des korrekten Empfangs des Kommandos "Quittung".
- Leerfeld (Wartefunktion zu verwenden, wenn nicht unmittelbar quittiert werden kann).

Das B-Feld der Zeitschlitze mit diesen MAC-Steuerinformationen trägt entweder Benutzerinformationen (U-Ebene) falls der $C_s$-Kanal verwendet wird oder die Signalisierungsinformation selbst bzw. keine Information bei Verwendung des $C_s$-Kanals.

Die Umschaltung im I-Rahmen läuft nach einem Schema ähnlich dem vorstehend in Punkt"a)" skiz-zierten ab:

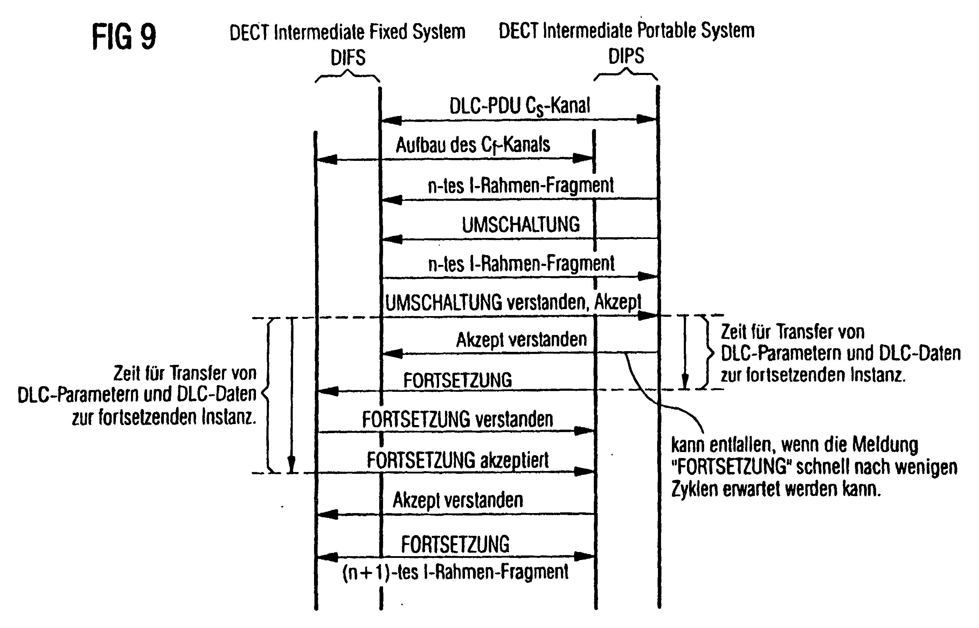

**$C_s$-Kanal → $C_f$-Kanal** gemäß FIGUR 9

Die initiierende Telekommunikationsschnittstelle DIFS, DIPS sendet auf dem $C_s$-Kanal nach Auf-bau der MAC-verbindung für den $C_f$-Kanal anstelle eines I-Rahmen-Segments das Umschaltekommando $C_s$-Kanal --> $C_f$-Kanal. Die Gegenseite quittiert auf dem $C_s$-Kanal den Akzept (einen Grund zur Rückweisung gibt es in diesem Fall nicht). Dann setzen beide Tele-kommunikationsschnittstellen DIFS, DIPS die Übertra-gung auf dem $C_f$-Kanal fort.

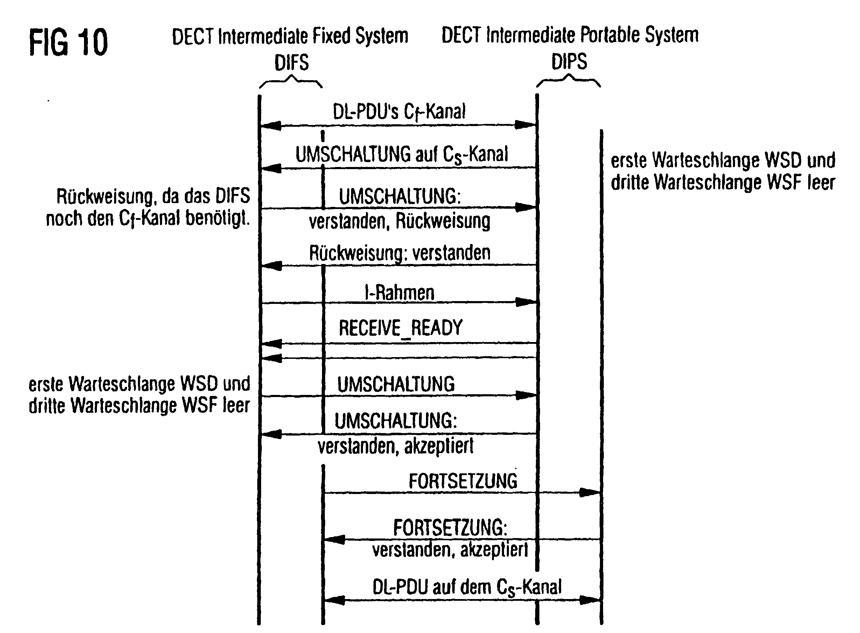

**$C_f$-Kanal → $C_s$-Kanal** gemäß FIGUR 10

Wenn die den $C_f$-Kanal initiierende Telekommunikationsschnittstelle DIFS, DIPS diesen Kanal nicht mehr benötigt, sendet sie auf dem $C_f$-Kanal das Um-schaltkommando $C_f$-Kanal --> $C_s$-Kanal. Benötigt auch die Gegenseite diesen Kanal zu diesem Zeitpunkt nicht mehr (WSD, WSF leer), quittiert sie den Akzept der Rückschaltung. Andernfalls weist sie die Rückschaltung zurück und übernimmt damit ihrerseits die Initiative zum erneuten Anstoß der Rückschaltung, wenn sie den $C_f$-Kanal nicht mehr benötigt. Solange der $C_f$-Kanal aktiv ist, kann er auch von der Gegenseite wieder benutzt werden.

Anmerkung

Das Verfahen kann natürlich auch an I-Frame-Grenzen verwendet werden.

Dabei gibt es zwei Möglichkeiten:

- MAC-Kommandos und Quittungen werden an DLCRahmengrenzen angewendet, d.h. gesendet.
- MAC-Kommandos und Quittungen werden präventiv bereits in laufende Übertragungen von DLC-Rahmen eingeblendet, der Zeitpunkt der Wirksamkeit jedoch auf DLC-Rahmenenden definiert.

Damit ergibt sich der Vorteil eines zeitgewinns, weil Verhandlungen und ggf. Folgeoperationen bereits parallel zu einer noch laufenden Übertragung stattfinden können.

Sonstiges

- Der $C_f$-Kanal kann nach DECT-Regeln bei Bedarf von beiden Telekommunikationsschnittstellen DIFS, DIPS aufgebaut werden. Kollisionen sollen dabei zu einem gemeinsamen Kanal führen.
- Bei Kollision zwischen Aufbau und Abbau hat der Abbau Vorrang.

- Die Verwendung des $C_f$-Kanals kann zusätzlich auch durch andere Kriterien stimuliert werden.

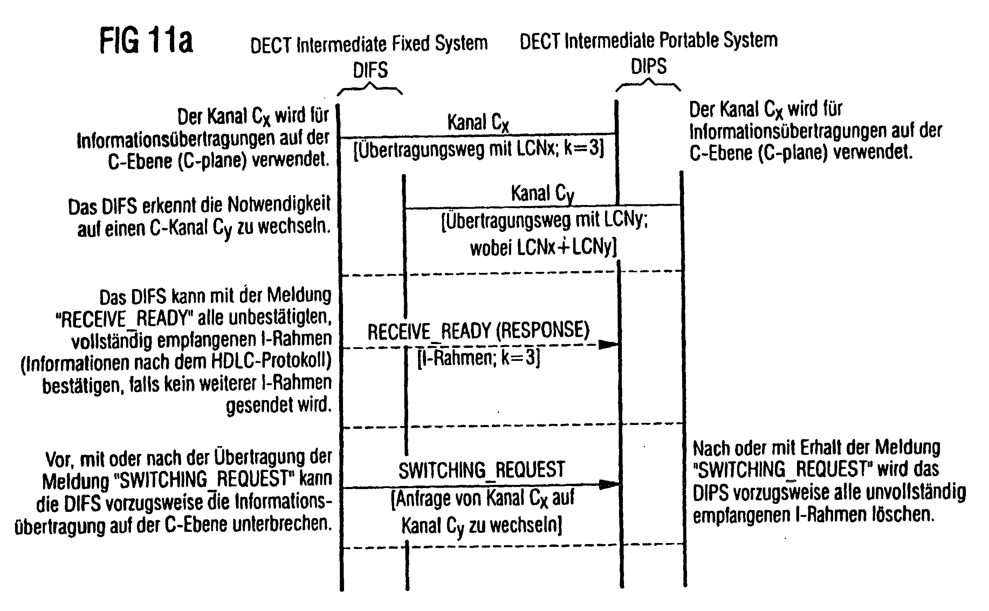

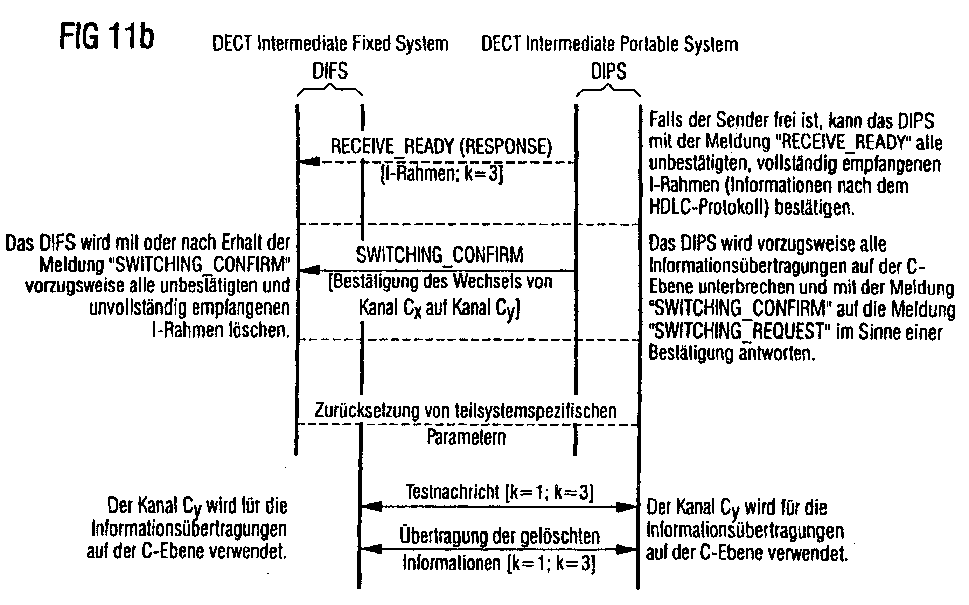

Ein zweites Ausführungsbeispiel für die Kanalwechsel wird ausgehend von FIGUR 6 anhand der FIGUREN 11 bis 15 erläutert.

Die FIGUREN 11 bis 15 zeigen verschiedene Anreiz-Zustands-Diagramme, die mögliche Abläufe beim Kanalwechsel darstellen.

FIGUR 11 zeigt ausgehend von den FIGUREN 1 bis 6 ein erstes Anreiz-Zustands-Diagramm, das den prinzipiellen Steuerungsablauf für einen Kanalwechsel darstellt.

Die erste Telekommunikationsschnittstelle DIFS ist auf einem ersten Übertragungsweg mit einer ersten Übertragungswegnummer LCNx (**L**ogical **C**onnection **N**umber; Kennung) durch einen ersten Teilsystemkanal $C_x$ mit der zweiten Telekommunikationsschnittstelle DIPS verbunden. Darüber hinaus besteht zwischen der ersten Telekommunikationsschnittstelle DIFS und der zweiten Telekommunikationsschnittstelle DIPS auf einem zweiten Übertragungsweg mit einer zweiten Übertragungswegnummer LCNy (Kennung) durch einen zweiten Teilsystemkanal $C_y$ eine weitere Telekommunikationsverbindung oder es kann alternativ zwischen der ersten Telekommunikationsschnittstelle DIFS und der zweiten Telekommunikationsschnittstelle DIPS auf einem zweiten Übertragungsweg mit einer zweiten Übertragungswegnummer LCNy durch einen zweiten Teilsystemkanal $C_y$ eine weitere Telekommunikationsverbindung aufgebaut werden.

Für die Übertragungswegnummern LCNx, LCNy gilt dabei die Beziehung LCNx ≠ LCNy. Der erste Teilsystemkanal $C_x$ kann als DECT-spezifischer $C_f$-Kanal oder $C_s$-Kanal ausgebildet sein. Aufgrund der bei dem DECT-spezifischen Telekommunikationsteilsystem WLL/RLL auftretenden Kanalkonstellationen ist der zweite Teilsystemkanal $C_y$ demzufolge ein $C_s$-Kanal bzw. ein $C_f$-Kanal oder $C_s$-Kanal. Nach FIGUR 11 wird der erste Teilsystemkanal $C_x$ für Informationsübertragungen auf der C-Ebene (C-plane) verwendet.

Zum Aufbau eines Übertragungsweges werden in bekannter Weise eine DECT-spezifische erste B-Feld-Meldung "BEARER_REQUEST" (vgl. ETSI-Publikation ETS 300175-3, Oktober 1992, Kap. 7.3.3.2) als Kommando (COMMAND) und eine DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) gesendet (vgl. ETSI-Publikation ETS 300175-3, Oktober 1992, Kap. 10.5.1.1 bis 10.5.1.3). Das Senden der ersten B-Feld-Meldung "BEARER_REQUEST" wird dabei vorzugsweise von der zweiten Telekommunikationsschnittstelle DIPS initiiert (vgl. FIGUREN 9 und 10 und ETSI-Publikation ETS 300175-3, Oktober 1992, Kap. 10.5.1.2 und 10.5.1.3) .

Durch die Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)", erkennt z.B. die erste Telekommunikationsschnittstelle DIFS die Notwendigkeit, einen Kanalwechsel (Wechsel von dem ersten Teilsystemkanal $C_x$ auf den zweiten Teilsystemkanal $C_y$) herbeizuführen. Das Ergebnis der Analyse bildet dabei den Stimulus für den Kanalwechsel.

Ein mögliches erstes Ergebnis dieser Analyse kann beispielsweise darin bestehen, daß auf dem ersten Teilsystemkanal $C_x$ vorzugsweise für eine vorgegebene Zeitdauer keine Nachrichten zwischen der ersten Telekommunikationschnittstelle DIFS und der zweiten Telekommunikationschnittstelle DIPS übertragen werden.

Ein mögliches zweites Ergebnis dieser Analyse kann beispielsweise darin bestehen, daß zwei Übertragungswege mit jeweils einer C-Ebene und einer U-Ebene aufgebaut sind und der Übertragungsweg auf dem die C-Ebene genutzt wird abgebaut werden soll; sodaß demzufolge ein Wechsel von dem abzubauenden, bisher aktiven $C_s$-Kanal zum bisher inaktiven $C_s$-Kanal notwendig wird.

Zur Minimierung des Aufwands ist es zweckmäßig, die vorstehend beschriebene Analyse in eine der Telekommunikationsschnittstellen DIFS, DIPS - z. B. in vorteilhafter Weise der ersten Telekommunikationsschnittstelle DIFS - zu konzentrieren und daraus die zweite Telekommunikationsschnittstelle DIPS zu steuern [MASTER-SLAVE -Konfiguration, bei der die erste Telekommunikationsschnittstelle DIFS der MASTER und die zweite Telekommunikationsschnittstelle DIPS der SLAVE ist]. Die erste Telekommunikationsschnittstelle DIFS hat in dieser Konstellation immer die Möglichkeit, eine dem ISDN-Dienst entsprechende DECT-Kanalstruktur auszuwählen (C-Ebene und/oder U-Ebene).

Anstelle der ersten Telekommunikationsschnittstelle DIFS ist es auch möglich, die zweite Telekommunikationsschnittstelle DIPS hierfür vorzusehen. Dies geht aber nur dann, wenn diese einen direkten Zugriff zur ISDN-"Schicht 3" besitzt. Alleine aus der ISDN-"Schicht 2"-Funktion kann die zweite Telekommunikationsschnittstelle DIPS nicht in allen Situationen eine TE-individuelle Verbindung mit C-Ebene und U-Ebene eindeutig auf eine entsprechende DECT-Kanalstruktur abbilden.

In der weiteren Erläuterung des Ausführungsbeispieles wird die vorstehend beschriebene MASTER-SLAVE-Konfiguration zugrundegelegt.

Mit einer als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) wird die erste Telekommunikationsschnittstelle DIFS vorzugsweise - nachdem sie die Notwendigkeit eines Kanalwechsels erkannt hat - alle unbestätigten (unbeantworteten), auf dem ersten Teilsystemkanal $C_x$ nach dem HDLC-Protokoll (**H**igh level **D**ata **L**ink **C**ontrol) übertragenen und vollständig empfangenen Informationen, die sogenannten I-Rahmen (Informationspaket), bestätigen (beantworten), falls kein weiterer I-Rahmen gesendet wird.

Nach dem HDLC-Protokoll ist es z.B. möglich, die Informationen (I-Rahmen) in Übertragungssequenzen (Fenstern) zu übertragen und jede Übertragungssequenz (jedes Fenster) separat zu quittieren. Im vorliegenden Fall werden die Informationen beispielsweise mit einer Fenstergröße von k = 3 übertragen, bevor quittiert wird. Die Fenstergröße k = 3 bedeutet dabei bezüglich der vorstehend erwähnten I-Rahmen, daß nach jedem dritten I-Rahmen eine Quittierung der zuvor übertragenen drei Rahmen stattfindet. Für die Fenstergröße k gilt allgemein folgende Beziehung:

$$1 \leq k \leq n \qquad \text{mit } n \in N$$

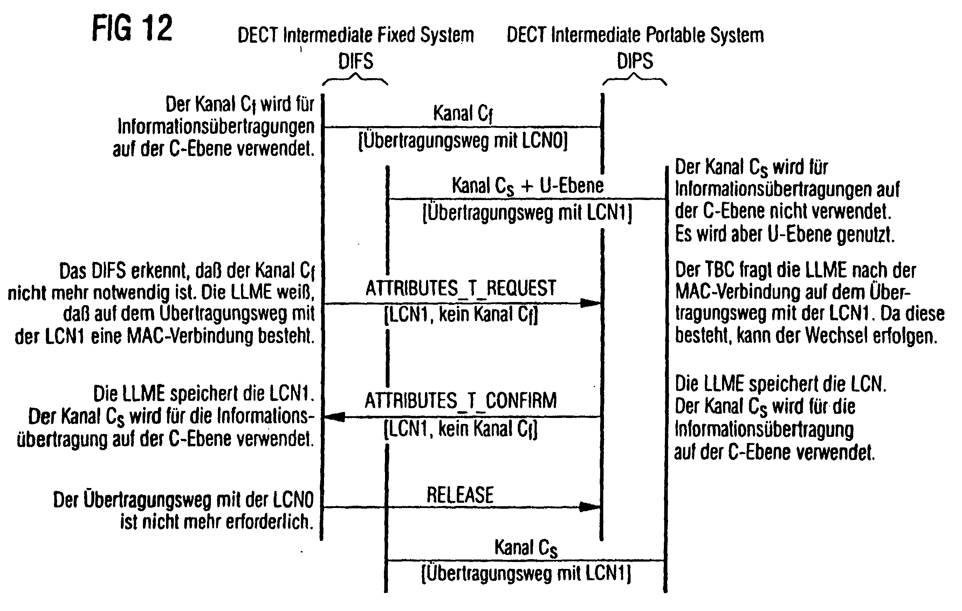

Durch die Übertragung einer ersten Meldung "SWITCHING_REQUEST"., die z.B. entweder im DECT-Standard definiert sein kann (vgl. MAC-Meldung "ATTRIBUTES_T._REQUEST" in FIGUREN 12 bis 15 gemäß ETSI-Publikation ETS 300175-3, Oktober 1992, Kap. 7.2.5.3.8) oder in diesem noch zu definieren ist, wird der Wunsch der ersten Telekommunikationsschnittstelle DIFS, die Übertragung der Systeminformationen von dem ersten Teilsystemkanal $C_x$ auf den zweiten Teilsystemkanal $C_y$ zu verlagern, der zweiten Telekommunikationsschnittstelle DIPS übermittelt. Der Wunsch kann dabei - wie vorstehend erwähnt - durch Stimulation oder ohne jegliche Anstoß entstanden sein.

Aufgrund der Übertragung dieser Meldung kann die erste Telekommunikationsschnittstelle DIFS entweder - vorzugsweise - die eigene Informationsübertragung auf der C-Ebene unterbrechen oder mit der Übertragung der Informationen auf der C-Ebene fortfahren. Unterbrechung bedeutet dabei, daß die erste Telekommunikationsschnittstelle DIFS für eine vorgegebene Zeitdauer keine weitere Informationen mehr senden wird. Die Unterbrechung kann beispielsweise vor, mit oder nach der Übertragung der Meldung erfolgen.

Darüber hinaus kann die Meldung an den I-Rahmengrenzen und innerhalb eines I-Rahmens gesendet werden.

Die zweite Telekommunikationsschnittstelle DIPS wird mit oder nach Erhalt der Meldung "SWITCHING_REQUEST" vorzugsweise alle unvollständig empfangenen I-Rahmen löschen und sie kann mit oder nach Erhalt der Meldung "SWITCHING_RE+-QUEST" die eigene Informationsübertragung auf der C-Ebene, wie die erste Telekommunikationsschnittstelle DIFS, entweder unterbrechen oder fortfahren.

Darüber hinaus kann die zweite Telekommunikationsschnittstelle DIPS, für den Fall das der eigene Sender frei ist, mit der als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) alle unbestätigten (unbeantworteten), auf dem ersten Teilsystemkanal $C_x$ nach dem HDLC-Protokoll (**H**igh level **D**ata **L**ink **C**ontrol) übertragenen und vollständig empfangenen Informationen, die sogenannten I-Rahmen, bestätigen (beantworten).

Alternativ zu der unmittelbaren Unterbrechung ist es auch möglich, daß die zweite Telekommunikationsschnittstelle DIPS vor der Unterbrechung die Übertragung eines I-Rahmens abschließt.

Die Unterbrechung der Informationsübertragung oder das Fortfahren der Informationsübertragung auf dem ersten Teilsystemkanal $C_x$ durch die zweite Telekommunikationsschnittstelle DIPS erfolgt vorzugsweise zwischen dem Empfang der ersten Meldung und vor der Übertragung einer zweiten Meldung "SWITCHING_CONFIRM", die z.B. wieder entweder im DECT-Standard definiert sein kann (vgl. MAC-Meldung "ATTRIBUTES_T._CONFIRM" in FIGUREN 12 bis 15 gemäß ETSI-Publikation ETS 300175-3, Oktober 1992, Kap. 7.2.5.3.8) oder in diesem noch zu definieren ist.

Durch die zweite Meldung "SWITCHING_ CONFIRM" wird beispielsweise dem Wunsch der ersten Telekommunikationsschnittstelle DIFS nach einem Wechsel des Teilsystemkanals entsprochen, indem diese bestätigt (positiv beantwortet) wird.

Es ist aber auch möglich, daß die zweite Telekommunikationsschnittstelle DIPS dem Wunsch bewußt oder unbewußt (z.B. dadurch, daß sie die erste Meldung aufgrund einer Störung auf der Funkübertragungsstrecke nicht empfangen hat) nicht entspricht.

So wird für den Fall, daß dem Wunsch bewußt nicht entsprochen wird, die erste Meldung "SWITCHING_REQUEST" entweder unmittelbar oder mittelbar, z.B. dadurch, daß eine vorgegebene Zeitdauer für die Bestätigung der ersten Meldung überschritten wird, von der zweiten Telekommunikationsschnittstelle DIPS abgelehnt (negativ beantwortet).

Anderenfalls wird die erste Meldung "SWITCHING_REQUEST" mittelbar, z.B. dadurch, daß eine vorgegebene Zeitdauer für die Bestätigung der ersten Meldung überschritten wird, abgelehnt (negativ beantwortet).

In beiden vorstehend genannten Fällen wird entweder die erste Meldung "SWITCHING_REQUEST" von der ersten Telekommunikationsschnittstelle DIFS für eine vorgegebene Anzahl nochmals übertragen oder der Kanalwechsel für unbestimmte Zeit abgebrochen.

Aufgrund der Übertragung der zweiten Meldung "SWITCHING_CONFIRM" wird die Informationsübertragung auf dem zweiten Teilsystemkanal $C_y$ fortgesetzt. Die Fortsetzung kanndabei vorzugsweise mit oder nach dem Übertragen der Meldung erfolgen.

Nach oder mit Erhalt der zweiten Meldung "SWITCHING_CONFIRM" wird die erste Telekommunikationsschnittstelle DIFS vorzugsweise die unbestätigten, auf dem ersten Teilsystemkanal $C_x$ übertragenen und unvollständig empfangenen Informationen ebenfalls löschen.

Bevor auf dem zweiten Teilsystemkanal $C_y$ die von der ersten Telekommunikationsschnittstelle DIFS und der zweiten Telekommunikationsschnittstelle DIPS gelöschten Informationen erneut übertragen werden, werden teilsystemspezifische Parameter, wie z.B. der bezüglich der DLC-Schicht spezifische Rückübertragungszähler bzw. -zeitgeber (vgl. ETSI-Publikation ETS 300175-4, Oktober 1992, Kap. 9.2.5.7) sowie die $C_T$-Paketnummer (vgl. ETSI-Publikation ETS 300175-3, Oktober 1992, Kap. 7.1.2) zurückgesetzt.

Darüber hinaus kann auf dem zweiten Teilsystemkanal $C_y$, bevor die von der ersten Telekommunikationsschnittstelle DIFS und der zweiten Telekommunikationsschnittstelle DIPS gelöschten Informationen erneut übertragen werden, eine Testnachricht übertragen werden, die bestätigt werden muß. Die Testnachricht ist dabei vorzugsweise die als Kommando (COMMAND) gesendete erste DLC-Meldung "RECEIVE_READY" (vgl. ETSI-Publikation ETS 300175-4, Oktober 1992, Kap. 7.11.2), während die Bestätigung der Testnachricht vorzugsweise die als Antwort (RESPONSE) gesendete erste DLC-Meldung "RECEIVE_READY" (vgl. ETSI-Publikation ETS 300175-4, Oktober 1992, Kap. 7.11.2) ist.

Sowohl die Testnachricht als auch die gelöschten Informationen werden vorzugsweise , um eine schnelle Synchronisation auf dem zweiten Teilsystemkanal $C_y$ zu erreichen, zu Beginn (Anfangsphase der Übertragung) mit der kleinstmöglichen Fenstergröße gemäß dem HDLC-Protokoll, das ist k =1, übertragen und anschließend wieder mit der Fenstergröße k = 3 übertragen.

FIGUR 12 zeigt ausgehend von FIGUR 11 ein zweites Anreiz-Zustands-Diagramm, das den Steuerungsablauf für den Wechsel von einem ersten Teilsystemkanal $C_f$ zu einem zweiten Teilsystemkanal $C_s$ darstellt.

Der erste Teilsystemkanal $C_f$ wird für die Informationsübertragung auf der C-Ebene verwendet. Der zweite Teilsystemkanal $C_s$ wird für die Informationsübertragung auf der C-Ebene nicht verwendet. Es wird aber die U-Ebene genutzt. Der erste Teilsystemkanal $C_f$ besitzt eine größere Übertragungskapazität als der zweite Teilsystemkanal $C_s$.

Die erste Telekommunikationsschnittstelle DIFS erkennt, daß der erste Teilsystemkanal $C_f$ nicht mehr notwendig ist und sendet eine erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie eine zweite MAC-Meldung "ATTRIBUTES_T._CONFIRM" zur ersten Telekommunikationsschnittstelle DIFS sendet. Danach wird der zweite Teilsystemkanal $C_s$ für die Informationsübertragung auf der C-Ebene verwendet und der erste Teilsystemkanal $C_f$ durch das Übertragen einer dritten MAC-Meldung "RELEASE" (vgl. ETSI-Publikation ETS 300175-3, Oktober 1992, Kap. 7.2.5.3.13) aufgelöst.

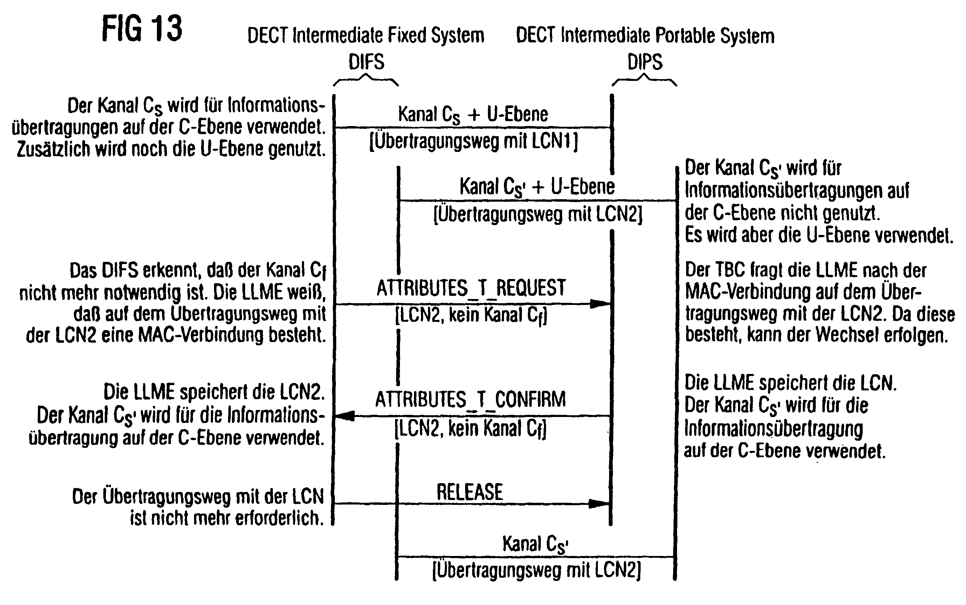

FIGUR 13 zeigt ausgehend von FIGUR 11 ein drittes Anreiz-Zustands-Diagramm, das den Steuerungsablauf für den Wechsel von dem zweiten Teilsystemkanal $C_s$ zu einem dritten Teilsystemkanal $C_{s'}$ darstellt.

Der zweite Teilsystemkanal $C_s$ wird für die Informationsübertragung auf der C-Ebene verwendet. Darüber hinaus wird die U-Ebene genutzt. Der dritte Teilsystemkanal $C_{s'}$ wird für die Informationsübertragung auf der C-Ebene nicht verwendet. Es wird aber die U-Ebene genutzt. Der zweite Teilsystemkanal $C_s$ besitzt die gleiche Übertragungskapazität wie der dritte Teilsystemkanal $C_{s'}$.

Die erste Telekommunikationsschnittstelle DIFS erkennt, daß der zweite Teilsystemkanal $C_s$ nicht mehr notwendig ist und sendet die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der dritte Teilsystemkanal $C_{s'}$ für die Informationsübertragung auf der C-Ebene verwendet und der zweite Teilsystemkanal $C_s$ durch das Übertragen der dritten MAC-Meldung "RELEASE" (vgl. ETSI-Publikation ETS 300175-3, Oktober 1992, Kap. 7.2.5.3.13) aufgelöst.

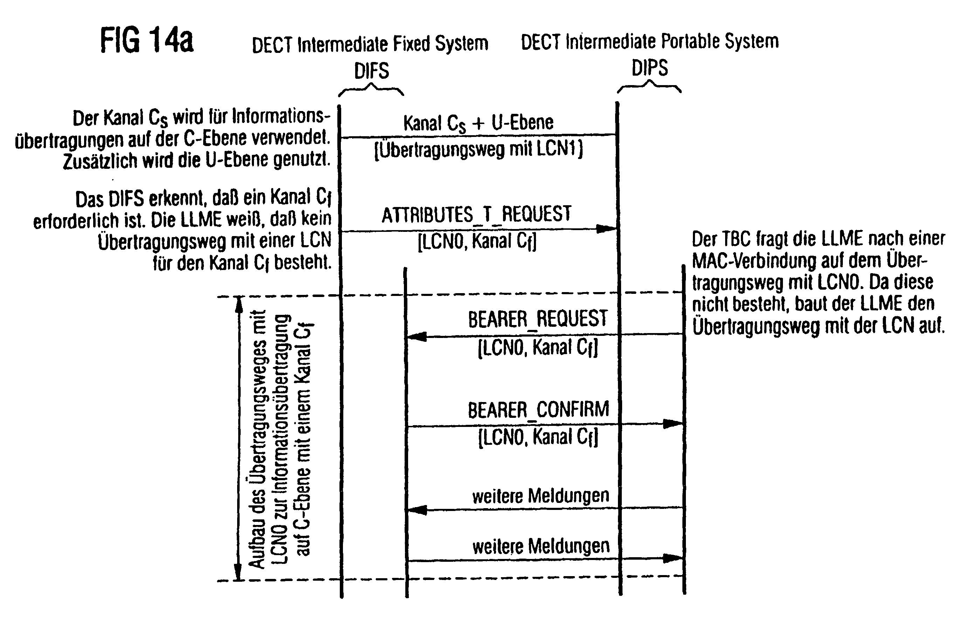

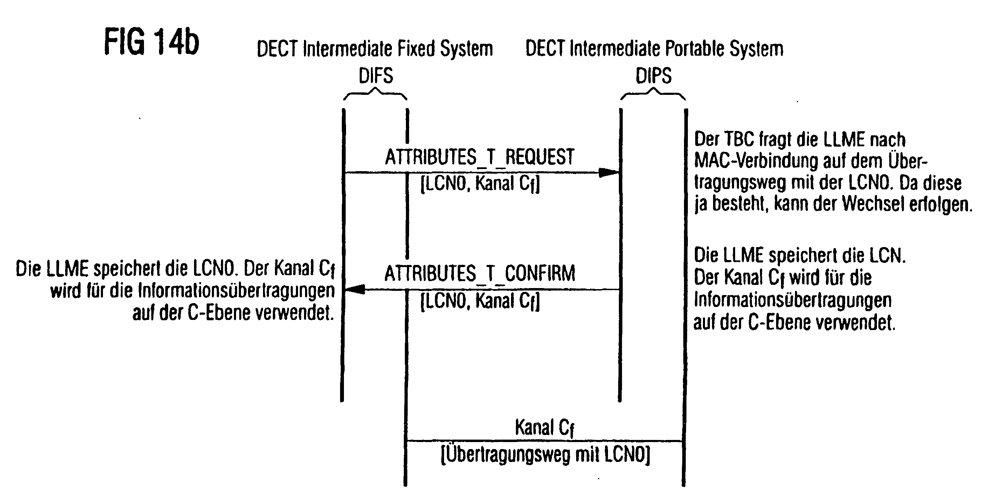

FIGUR 14 zeigt ausgehend von FIGUR 11 ein viertes Anreiz-Zustands-Diagramm, das den Steuerungsablauf für den Wechsel von dem zweiten Teilsystemkanal $C_s$ zu dem ersten Teilsystemkanal $C_f$ darstellt, wobei die Vorbereitung des Wechsels von der ersten Telekommunikationsschnittstelle DIFS initiiert wird.

Der zweite Teilsystemkanal $C_s$ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal $C_f$ ist noch nicht aufgebaut. Der zweite Teilsystemkanal $C_s$ hat eine kleinere Übertragungskapazität als der erste Teilsystemkanal $C_f$.

Die erste Telekommunikationsschnittstelle DIFS erkennt, daß der erste Teilsystemkanal $C_f$ notwendig ist. Da aber noch kein Übertragungsweg mit der Kennung LCN für den ersten Teilsystemkanal $C_f$ besteht, sendet die erste Telekommunikationsschnittstelle DIFS der zweiten Telekommunikationsschnittstelle DIPS die erste MAC-Meldung "ATTRIBUTES_T._REQUEST" (vgl. ETSI-Publikation ETS 300175-3, Oktober 1992, Kap. 7.2.5.3.8). Mit dieser Meldung teilt sie der zweiten Telekommunikationsschnittstelle DIPS mit, daß ein Übertragungsweg mit der Kennung LCN, z.B. der Kennung LCN0, für den ersten Teilsystemkanal $C_f$ benötigt wird.

Die Wahl der Kennung LCN - im vorliegenden Fall der LCN0 - als Kennung für den aufzubauenden Übertragungsweg erfolgt nicht willkürlich, sondern gezielt nach einem vorgegebenen Auswahlkriterium. Dieses Kriterium besteht ganz allgemein formuliert darin, daß als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Die zweite Telekommunikationsschnittstelle DIPS, die gemäß den Ausführungen bei der Beschreibung der FIGUR 11 vorzugsweise für den Aufbau eines Übertragungsweges verantwortlich ist (vgl. ETSI-Publikation ETS 300175-3, Oktober 1992, Kap. 10.5.1.2 und 10.5.1.3), sendet die DECT-spezifische erste B-Feld-Meldung "BEARER_REQUEST" (vgl. ETSI-Publikation ETS 300175-3, Oktober 1992, Kap. 7.3.3.2) als Kommando (COMMAND) an die erste Telekommunikationsschnittstelle DIFS. Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Die erste Telekommunikationsschnittstelle DIFS sendet danach die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Teilsystemkanal $C_f$ für die Informationsübertragung auf der C-Ebene verwendet.

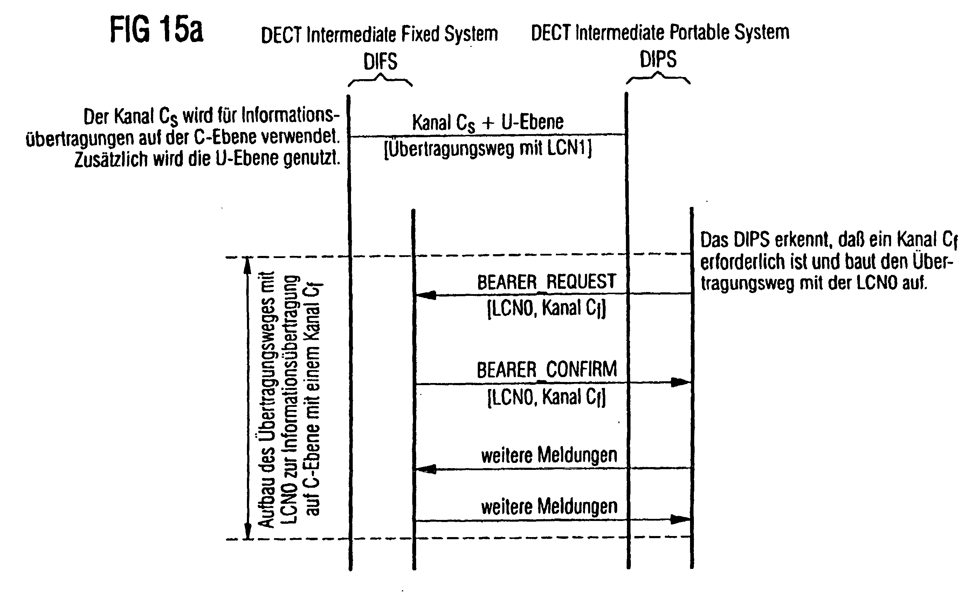

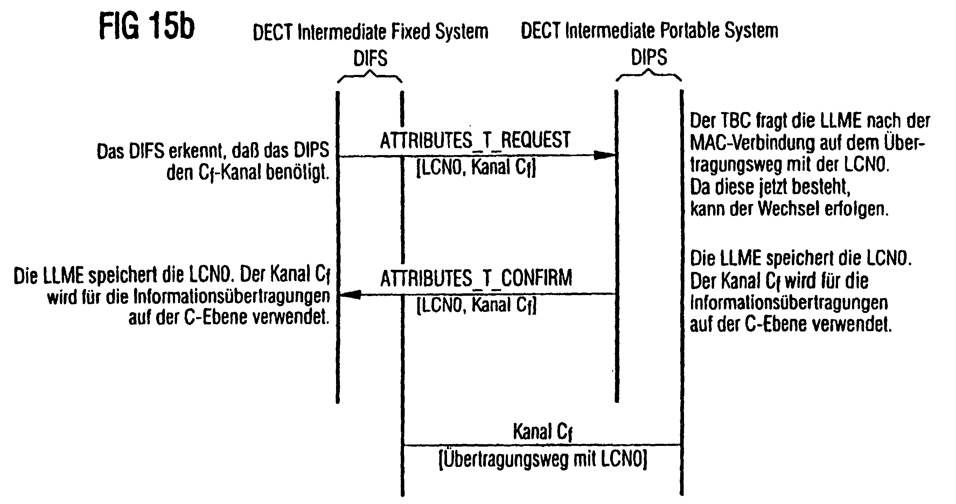

FIGUR 15 zeigt ausgehend von FIGUR 11 ein fünftes Anreiz-Zustands-Diagramm, das den Steuerungsablauf für den Wechsel von dem zweiten Teilsystemkanal $C_s$ zu dem ersten Teilsystemkanal $C_f$ darstellt, wobei die Vorbereitung des Wechsels von der zweiten Telekommunikationsschnittstelle DIPS initiiert wird.

Der zweite Teilsystemkanal $C_s$ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal $C_f$ ist noch nicht aufgebaut. Der zweite Teilsystemkanal $C_s$ hat eine kleinere Übertragungskapazität als der erste Teilsystemkanal $C_f$.

Die zweite Telekommunikationsschnittstelle DIFS erkennt, daß der erste Teilsystemkanal $C_f$ notwendig ist. Da aber noch kein Übertragungsweg mit der Kennung LCN, z.B. der Kennung LCN0, für den ersten Teilsystemkanal $C_f$ besteht, wird dieser von ihr aufgebaut.

Die Wahl der Kennung LCN - im vorliegenden Fall der LCN0 -als Kennung für den aufzubauenden Übertragungsweg erfolgt nicht willkürlich, sondern wiederum gezielt nach einem vorgegebenen Auswahlkriterium. Dieses Kriterium besteht ganz allgemein formuliert darin, daß als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Für den Aufbau des Übertragungsweges sendet die zweite Telekommunikationsschnittstelle DIPS, die gemäß den Ausführungen bei der Beschreibung der FIGUR 11 vorzugsweise für den Aufbau eines Übertragungsweges verantwortlich ist (vgl. ETSI-Publikation ETS 300175-3, Oktober 1992, Kap. 10.5.1.2 und 10.5.1.3), der ersten Telekommunikationsschnittstelle DIFS die DECT-spezifische erste B-Feld-Meldung "BEARER_REQUEST" (vgl. ETSI-Publikation ETS 300175-3, Oktober 1992, Kap. 7.3.3.2) als Kommando (COMMAND).

Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Dies von der ersten Telekommunikationsschnittstelle DIFS erkannt, sodaß diese die erste MAC-Meldung "ATTRIBUTES_T._REQUEST" (vgl. ETSI-Publikation ETS 300175-3, Oktober 1992, Kap.

7.2.5.3.8) zur zweiten Telekommunikationsschnittstelle DIPS sendet.

Die zweite Telekommunikationsschnittstelle DIPS bestätigt die erste MAC-Meldung "ATTRIBUTES_ T._REQUEST", indem sie die zweite MAC-Meldung "ATTRIBUTES_T._CONFIRM" zur ersten Telekommunikationsschnittstelle DIFS sendet. Danach wird der erste Teilsystemkanal $C_f$ für die Informationsübertragung auf der C-Ebene verwendet.

**Patentansprüche**

1. Verfahren zum Zuweisen von Telekommunikationskanälen unterschiedlicher Kanalkapazität in einem hybriden Telekommunikationssystem, insbesondere einem ISDN $\leftrightarrow$ DECT-spezifischen "RLL/WLL"-System,

   a) wobei das hybride Telekommunikationssystem zur Übertragung von Systemnachrichten

   a1) ein erstes Telekommunikationsteilsystem (ISDN) mit einem ersten Telekommunikationskanal (D-Kanal) und einer ersten Nachrichtenübertragungskapazität und
   a2) ein zweites Telekommunikationsteilsystem (DIIS) mit einem zweiten Telekommunikationskanal ($C_f$, $C_x$, $C_y$) und einer zweiten Nachrichtenübertragungskapazität und mit einem dritten Telekommunikationskanal ($C_s$, $C_x$, $C_y$) und einer dritten Nachrichtenübertragungskapazität

   enthält,
   b) wobei das zweite Telekommunikationsteilsystem (DIIS) zur Übertragung der Systemnachrichten und zur Übertragung von Teilsystemnachrichten des zweiten Telekommunikationsteilsystems eine erste Telekommunikationsschnittstelle (DIFS) und eine zweite Telekommunikationsschnittstelle (DIPS) aufweist, die über den zweiten Telekommunikationskanal ($C_f$, $C_x$, $C_y$) und/oder den dritten Telekommunikationskanal ($C_s$, $C_x$, $C_y$) miteinander verbunden sind,
   c) wobei das zweite Telekommunikationsteilsystem (DIIS) als lokale Nachrichtenübertragungsschleife über die beiden Telekommunikationsschnittstellen (DIFS, DIPS) in das erste Telekommunikationsteilsystem (I-TTS) eingebunden ist,
   d) wobei die erste Nachrichtenübertragungskapazität kleiner als die zweite Nachrichtenübertragungskapazität und größer als die dritte Nachrichtenübertragungskapazität ist,
   **dadurch gekennzeichnet, daß** die Systemnachrichten,

   e) wenn die auf dem ersten Telekommunikationskanal (D-Kanal) zu übertragende Nachrichtenmenge die auf dem dritten Telekommunikationskanal ($C_s$, $C_x$, $C_y$) übertragbare Nachrichtenmenge nicht überschreitet, über den ersten Telekommunikationskanal (D-Kanal) und den dritten Telekommunikationskanal ($C_s$, $C_x$, $C_y$) übertragen werden,
   f) wenn die auf dem ersten Telekommunikationskanal (D-Kanal) zu übertragene Nachrichtenmenge die auf dem dritten Telekommunikationskanal ($C_s$, $C_x$, $C_y$) übertragbare Nachrichtenmenge überschreitet, über den ersten Telekommunikationskanal (D-Kanal) und den zweiten Telekommunikationskanal ($C_f$, $C_x$, $C_y$) übertragen werden.

2. Verfahren nach Anspruch 1, **dadurch gekennzeichnet, daß**
   die Übertragung der Systemnachrichten in dem zweiten Telekommunikationsteilsystem derart gesteuert wird, daß

   a) die Systemnachrichten in der als Nachrichtensendeeinrichtung dienenden Telekommunikationsschnittstelle (DIFS) in eine Warteschlange gelegt wird,
   b) ein Füllgrad der mit den Systemnachrichten gefüllten Warteschlange (WSD, WSS, WSF) ermittelt wird,
   c) der dritte Telekommunikationskanal ($C_s$, $C_x$, $C_y$) für die Übertragung der Systemnachrichten stimuliert wird, wenn der ermittelte Füllgrad einen Schwellenwert (SD) nicht überschreitet,
   d) der zweite Telekommunikationskanal ($C_f$, $C_x$, Cy) für die Übertragung der Systemnachrichten stimuliert wird, wenn der ermittelte Füllgrad den Schwellenwert (SD) überschreitet.

3. Verfahren nach Anspruch 2, **dadurch gekennzeichnet, daß**
   der Kanalwechsel von dem zweiten Telekommunikationskanal ($C_f$, $C_x$, $C_y$) zum dritten Telekommunikationskanal ($C_s$, $C_x$, $C_y$) angestoßen wird, wenn in der Warteschlange (WSD, WSS, WSF) keine Systemnachrichten enthalten sind.

4. Verfahren nach einem der Ansprüche 1 bis 3, **dadurch gekennzeichnet, daß**

   a) die Nachrichten auf dem zweiten Telekommunikationskanal ($C_f$, $C_x$, $C_y$) oder dem dritten Telekommunikationskanal ($C_s$, $C_x$, $C_y$) übertragen werden,
   b) ein Umschaltkommando (SWITCHING_REQUEST, ATTRIBUTE_REQUEST, SUSPEND) übertragen wird, mit dem eine der beiden Telekommunikationsschnittstellen (DIFS, DIPS) der anderen Telekommunikationsschnittstelle (DIFS, DIPS) signalisiert, daß die Nachrichten auf dem dritten Telekommunikationskanal ($C_s$, $C_x$, $C_y$) bzw. dem zweiten Telekommunikationskanal ($C_f$, $C_x$, $C_y$) übertragen werden sollen,
c) eine Umschaltantwort (SWITCHING_CONFIRM, ATTRIBUTE_CONFIRM, RESUME) von der das Umschaltkommando empfangenden Telekommunikationsschnittstelle (DIFS, DIPS) zu der das Umschaltkommando sendenden Telekommunikationsschnittstelle (DIFS, DIPS) übertragen wird.

5. Verfahren nach Anspruch 4, **dadurch gekennzeichnet, daß**
das Umschaltkommando (SWITCHING_REQUEST, ATTRIBUTE_REQUEST) erneut übertragen wird, wenn die Umschaltantwort (SWITCHING_CONFIRM, ATTRIBUTE_CONFIRM) nach einer vorgegebenen Zeitdauer nicht übertragen wird.

6. Verfahren nach Anspruch 5, **dadurch gekennzeichnet, daß**
das Umschaltkommando (SWITCHING_REQUEST, ATTRIBUTE_REQUEST) beim wiederholten Ausbleiben der Umschaltantwort (SWITCHING_CONFIRM, ATTRIBUTE_CONFIRM) für eine vorgegebene Anzahl weiter übertragen wird, bevor die Steuerung des Kanalwechsels für unbestimmte abgebrochen wird.

7. Verfahren nach Anspruch 4, **dadurch gekennzeichnet, daß**
die Umschaltantwort (SWITCHING_CONFIRM, ATTRIBUTE_CONFIRM) eine Umschaltbestätigung ist, mit dem die das Umschaltkommando empfangende Telekommunikationsschnittstelle (DIFS, DIPS) der das Umschaltkommando sendenden Telekommunikationsschnittstelle (DIFS, DIPS) signalisiert, daß die Nachrichten auf dem dritten Telekommunikationskanal ($C_s$, $C_x$, $C_y$) bzw. dem zweiten Telekommunikationskanal ($C_f$, $C_x$, $C_y$) übertragen werden.

8. Verfahren nach einem der Ansprüche 4 bis 7, **dadurch gekennzeichnet, daß**
vor, mit oder nach der Übertragung des Umschaltkommandos (SWITCHING_REQUEST, ATTRIBUTE_REQUEST) die Übertragung der Nachrichten unterbrochen wird und daß mit oder nach der Übertragung der Umschaltantwort (SWITCHING_CONFIRM, ATTRIBUTE_CONFIRM) die Übertragung der Nachrichten wiederaufgenommen wird.

9. Verfahren nach Anspruch 8, **dadurch gekennzeichnet, daß**
unmittelbar nach der Übertragung des Umschaltkommandos (SWITCHING_REQUEST, ATTRIBUTE_REQUEST) die Übertragung der Nachrichten unterbrochen wird und daß im wesentlichen unmittelbar nach der Übertragung des Umschaltkommandos (SWITCHING_REQUEST, ATTRIBUTE_REQUEST) die Umschaltantwort (SWITCHING_COMFIRM, ATTRIBUTE_CONFIRM) übertragen wird.

10. Verfahren nach Anspruch 8, **dadurch gekennzeichnet, daß**
unmittelbar nach der Übertragung des Umschaltkommandos (SWITCHING_REQUEST, ATTRIBUTE_REQUEST) die Übertragung der Nachrichten durch die das Umschaltkommando (SWITCHING_REQUEST, ATTRIBUTE_REQUEST) sendende Telekommunikationsschnittstelle (DIFS, DIPS) unterbrochen wird, daß im wesentlichen unmittelbar nach der Übertragung des Umschaltkommandos (SWITCHING_REQUEST, ATTRIBUTE_REQUEST) die Übertragung der Nachrichten durch die das Umschaltkommando (SWITCHING_REQUEST, ATTRIBUTE_REQUEST) empfangende Telekommunikationsschnittstelle (DIFS, DIPS) dann unterbrochen wird, wenn von dieser Telekommunikationsschnittstelle (DIFS, DIPS) ein in sich abgeschlossenens Nachrichtenpaket abschließend übertragen worden ist und daß im wesentlichen unmittelbar nach der Übertragung des Nachrichtenpakets die Umschaltantwort (SWITCHING_CONFIRM, ATTRIBUTE_CONFIRM) übertragen wird.

11. Verfahren nach Anspruch 8, **dadurch gekennzeichnet, daß**
unmittelbar nach der Übertragung des Umschaltkommandos (SWITCHING_REQUEST, ATTRIBUTE_REQUEST) die Übertragung der Nachrichten durch die das Umschaltkommando (SWITCHING_REQUEST, ATTRIBUTE_REQUEST) sendende Telekommunikationsschnittstelle (DIFS, DIPS) unterbrochen wird, daß im wesentlichen unmittelbar nach der Übertragung des Umschaltkommandos (SWITCHING_REQUEST, ATTRIBUTE_REQUEST) die Übertragung der Nachrichten durch die das Umschaltkommando (SWITCHING_REQUEST, ATTRIBUTE_REQUEST) empfangende Telekommunikationsschnittstelle (DIFS, DIPS) nach einer vorgegebenen Zeitdauer zur Bestätigung bereits empfangener Nachrichten unterbrochen wird und daß im wesentlichen unmittelbar nach der Übertragung der Bestätigung die Umschaltantwort (SWITCHING_CONFIRM, ATTRIBUTE_CONFIRM) übertragen wird.

12. Verfahren nach einem der Ansprüche 4 bis 11, **dadurch gekennzeichnet, daß**
nach der Übertragung der Umschaltantwort und vor der Übertragung der Systemnachrichten auf dem dritten Telekommunikationskanal ($C_s$, $C_x$, $C_y$) bzw. dem zweiten Telekommunikationskanal ($C_f$, $C_x$, $C_y$) vorgegebene teilsystemspezifische Parameter zurückgesetzt werden.

13. Verfahren nach einem der Ansprüche 4 bis 12, **dadurch gekennzeichnet, daß** auf dem dritten Telekommunikationskanal ($C_s$, $C_x$, $C_y$) bzw. dem zweiten Telekommunikationskanal ($C_f$, $C_x$, $C_y$) nach einem Kanalwechsel eine Testnachricht mit Aufforderung zur Bestätigung gesendet wird.

14. Verfahren nach Anspruch 13, **dadurch gekennzeichnet, daß** die Testnachricht eine RECEIVE_READY-Meldung ist, die als Kommando (COMMAND) gesendet wird und daß die Bestätigung eine RECEIVE_READY-Meldung ist, die als Antwort (RESPONSE) gesendet wird.

15. Verfahren nach Anspruch 8, 9 oder 11, **dadurch gekennzeichnet, daß** ein durch die unmittelbare Unterbrechung unvollständig übertragenes oder unbeantwortetes Nachrichtenpaket der zu übertragenden Nachrichten auf dem dritten Telekommunikationskanal ($C_s$, $C_x$, $C_y$) bzw. dem zweiten Telekommunikationskanal ($C_f$, $C_x$, $C_y$) nach einem Kanalwechsel erneut übertragen wird.

16. Verfahren nach einem der Ansprüche 4 bis 15, **dadurch gekennzeichnet, daß** die Nachrichten nach einem vorgegebenen Übertragungsprinzip mit einer vorgegebenen Übertragungssequenz (k =3) übertragen werden und daß die Nachrichten auf dem dritten Telekommunikationskanal ($C_s$, $C_x$, $C_y$) bzw. dem zweiten Telekommunikationskanal ($C_f$, $C_x$, $C_y$) nach einem Kanalwechsel mit einer kleinstmöglichen Übertragungssequenz (k =1) übertragen werden.

17. Verfahren nach Anspruch 16, **dadurch gekennzeichnet, daß** das Übertragungsprinzip mit der vorgegebenen Übertragungssequenz das HDLC-Protokoll zur Übertragung von HDLC-Rahmen ist.

18. Verfahren nach einem der Ansprüche 4 bis 17, **dadurch gekennzeichnet, daß** Systemnachrichten mit Nutzinformationen und/oder den Systeminformationen und/oder die Teilsysteminformationen zwischen den Telekommunikationsschnittstellen (DIFS, DIPS) des Telekommmunikationsteilsystems (DIIS) auf Übertragungswegen mit unterschiedlichen Kennungen (LCNx, LCNy, LCNz) übertragen werden.

19. Verfahren nach Anspruch 18, **dadurch gekennzeichnet, daß** einem ersten Übertragungsweg, dem der zweite Telekommunikationskanal ($C_f$) zugeordnet ist, eine erste Kennung zugewiesen wird, die durch andere Übertragungswege nicht belegt ist.

20. Verfahren nach Anspruch 19, **dadurch gekennzeichnet, daß** die erste Kennung die jeweils kleinste vergebbare Kennung von den die Übertragungswege kennzeichnenden Kennungen (LCNx, LCNy, LCNz) ist.

21. Verfahren nach Anspruch 19, **dadurch gekennzeichnet, daß** die erste Kennung die jeweils größte vergebbare Kennung von den die Übertragungswege kennzeichnenden Kennungen (LCNx, LCNy, LCNz) ist.

22. Verfahren nach einem der Ansprüche 4 bis 21, **dadurch gekennzeichnet, daß** das Umschaltkommando (SWITCHING_REQUEST, ATTRIBUTE_REQUEST) von der ersten Telekommunikationsschnittstelle (DIFS) übertragen wird.

23. Verfahren nach Anspruch 4 oder nach Anspruch 4 und 8, **dadurch gekennzeichnet, daß** das Umschaltkommando (SWITCHING_REQUEST, ATTRIBUTE_REQUEST) und/oder die Umschaltantwort (SWITCHING_CONFIRM, ATTRIBUTE_CONFIRM) jeweils von der jeweiligen das Umschaltkommando (SWITCHING_REQUEST, ATTRIBUTE_REQUEST) bzw. die Umschaltantwort (SWITCHING_CONFIRM, ATTRIBUTE_CONFIRM) empfangenden Telekommunikationsschnittstelle () quittiert wird.

24. Verfahren nach Anspruch 23, **dadurch gekennzeichnet, daß** das Umschaltkommando (SWITCHING_REQUEST, ATTRIBUTE_REQUEST) und/oder die Umschaltantwort (SWITCHING_CONFIRM, ATTRIBUTE_CONFIRM) ablehnend oder akzeptierend quittiert wird.

25. Verfahren nach Anspruch 23, **dadurch gekennzeichnet, daß** im Fall der Ablehnung des Umschaltkommandos (SWITCHING_REQUEST, ATTRIBUTE_REQUEST) bzw. der Umschaltantwort (SWITCHING_CONFIRM, ATTRIBUTE_ CONFIRM) die die jeweilige Ablehnung signalisierende Telekommunikationsschnittstelle (DIFS, DIPS) den Kanalwechsel mit der Übertragung des Umschaltkommandos (SWITCHING_REQUEST, ATTRIBUTE_ REQUEST) anstoßen wird.

**26.** Verfahren nach Anspruch 4, oder Anspruch 4 und 8 und nach Anspruch 24, **dadurch gekennzeichnet, daß**
im Fall der Akzeptierung des Umschaltkommandos (SWITCHING_REQUEST, ATTRIBUTE_REQUEST) und der Umschaltantwort (SWITCHING_CONFIRM, ATTRIBUTE_CONFIRM) die Übertragung der Nachrichten nach der Wiederaufnahme der Übertragung an der Stelle einsetzt, wo die Übertragung unterbrochen worden ist.

**27.** Verfahren nach Anspruch 4, Anspruch 4 und 8 oder nach einem der Ansprüche 23 bis 26, **dadurch gekennzeichnet, daß**
das Umschaltkommando (SWITCHING_REQUEST, ATTRIBUTE_REQUEST) von einer ersten Telekommunikationsschnittstelle (DIFS) oder einer zweiten Telekommunikationsschnittstelle (DIPS) übertragen wird.

**28.** Verfahren nach Anspruch 4, Anspruch 4 und 8 oder nach einem der Ansprüche 23 bis 27, **dadurch gekennzeichnet, daß**
das Umschaltkommando (SWITCHING_REQUEST, ATTRIBUTE_REQUEST) und die Umschaltantwort (SWITCHING_CONFIRM, ATTRIBUTE_CONFIRM) in einer ersten Nachrichtenübertragungsschicht (DLC-Schicht) einer in Nachrichtenübertragungsschichten eingeteilten Nachrichtenübertragungsstruktur der Telekommunikationsschnittstelle (DIFS, DIPS) übertragen werden, in der im wesentlichen die Teilsystemnachrichten übertragen werden.

**29.** Verfahren nach Anspruch 4, Anspruch 4 und 8 oder nach einem der Ansprüche 23 bis 27, **dadurch gekennzeichnet, daß**
das Umschaltkommando (SWITCHING_REQUEST, ATTRIBUTE_REQUEST) und die Umschaltantwort (SWITCHING_CONFIRM, ATTRIBUTE_CONFIRM) in einer zweiten Nachrichtenübertragungsschicht (MAC-Schicht) übertragen werden, die bezüglich einer in Nachrichtenübertragungsschichten eingeteilten Nachrichtenübertragungsstruktur der Telekommunikationsschnittstelle (DIFS, DIPS) einer für die Übertragung der Teilsystemnachrichten im wesentlichen vorgesehenen ersten Nachrichtenübertragungsschicht (DLC-Schicht) untergeordnet ist und daß das Umschaltkommando (SWITCHING_REQUEST, ATTRIBUTE_REQUEST) und die Umschaltantwort (SWITCHING_CONFIRM, ATTRIBUTE_CONFIRM) dabei derart übertragen werden, daß die Datenstruktur der ersten Nachrichtenübertragungsschicht (DLC-Schicht) unbeeintrachtigt bleibt.

**30.** Verfahren nach einem der Ansprüche 1 bis 35, **dadurch gekennzeichnet, daß**
das erste Telekommunikationsteilsystem (ISDN) ein ISDN-System ist.

**31.** Verfahren nach Anspruch 30, **dadurch gekennzeichnet, daß**
die Systemnachricht auf dem D-Kanal übertragen werden.

**32.** Verfahren nach einem der Ansprüche 1 bis 31, **dadurch gekennzeichnet, daß**
das zweite Telekommunikationsteilsystem (DIIS) ein DECT/GAP-System (DGS) enthält.

**33.** Verfahren nach einem der Ansprüche 1 bis 31, **dadurch gekennzeichnet, daß**
das Telekommunikationsteilsystem (DIIS) ein GSM-System enthält.

**34.** Verfahren nach einem der Ansprüche 1 bis 31, **dadurch gekennzeichnet , daß**
das Telekommunikationsteilsystem (DIIS) ein PHS-System, ein WACS-System oder ein PACS-System enthält.

**35.** Verfahren nach einem der Ansprüche 1 bis 31, **dadurch gekennzeichnet, daß**
das Telekommunikationsteilsystem (DIIS) ein "IS-54"-System oder ein PDC-System enthält.

**36.** Verfahren nach einem der Ansprüche 1 bis 31, **dadurch gekennzeichnet, daß**
das Telekommunikationsteilsystem (DIIS) ein CDMA-System, ein TDMA-System, ein FDMA-System oder ein - bezüglich dieser gennannten Übertragungsstandards - hybrides System enthält.

**37.** Verfahren nach Anspruch 32, **dadurch gekennzeichnet, daß**
die erste Telekommunikationsschnittstelle (DIFS) ein **D**ECT **I**NTERMEDIATE **F**IXED **S**YSTEM (DIFS) und die zweite Telekommunikationsschnittstelle (DIPS) ein **D**ECT **I**NTERMEDIATE **P**ORTABLE **S**YSTEM (DIPS) ist.

**38.** Verfahren nach Anspruch 32, **dadurch gekennzeichnet, daß**
der zweite Telekommunikationskanal ($C_f$) der $C_f$-Kanal des DECT-Systems ist.

**39.** Verfahren nach Anspruch 32, **dadurch gekennzeichnet, daß**
der dritte Telekommunikationskanal ($C_s$) der $C_s$-Kanal des DECT-Systems ist bzw. sind.

**40.** Verfahren nach einem der Ansprüche 4 bis 22 und nach Anspruch 32, **dadurch gekennzeichnet, daß**
das Umschaltkommando (SWITCHING_REQUEST, ATTRIBUTE_REQUEST) das ATTRIBUTE_REQUEST-Informationselement des DECT-Standards ist.

41. Verfahren nach einem der Ansprüche 4 bis 22 oder Anspruch 40 und nach Anspruch 32, **dadurch gekennzeichnet, daß** die Umschaltantwort (SWITCHING_CONFIRM, ATTRIBUTE_CONFIRM) das ATTRIBUTE_CONFIRM-Informationselement des DECT-Standards ist.

42. Verfahren nach Anspruch 4, Anspruch 4 und 8 oder einem der Ansprüche 23 bis 29 und nach Anspruch 32, **dadurch gekennzeichnet, daß** das Umschaltkommando (SWITCHING_REQUEST, ATTRIBUTE_REQUEST) das SUSPEND-Informationselement des DECT-Standards ist.

43. Verfahren nach Anspruch 4, Anspruch 4 und 8, einem der Ansprüche 23 bis 29 oder Anspruch 42 und nach Anspruch 32, **dadurch gekennzeichnet, daß** die Umschaltantwort (SWITCHING_CONFIRM, ATTRIBUTE_CONFIRM) das RESUME-Informationselement des DECT-Standards ist.

44. Verfahren nach Anspruch 28, **dadurch gekennzeichnet, daß** die erste Nachrichtenübertragungsschicht die DLC-Schicht (**D**ata **L**ink **C**ontrol) des DECT-Standards ist.

45. Verfahren nach Anspruch 29, **dadurch gekennzeichnet, daß** die zweite Nachrichtenübertragungsschicht die MAC-Schicht (**M**edium **A**ccess **C**ontrol) des DECT-Standards ist.

## Claims

1. Method for allocating telecommunications channels of varying channel capacity in a hybrid telecommunications system, particularly in an ISDN $\leftrightarrow$ DECT-specific "RLL/WLL" system,

   a) where, for transmitting system messages, the hybrid telecommunications system contains

   a1) a first telecommunications subsystem (ISDN) having a first telecommunications channel (D channel) and a first message transmission capacity, and
   a2) a second telecommunications subsystem (DIIS) having a second telecommunications channel ($C_f$, $C_x$, $C_y$) and a second message transmission capacity and having a third telecommunications channel ($C_s$, $C_x$, $C_y$) and a third message transmission capacity,

   b) where the second telecommunications subsystem (DIIS) has, for transmitting the system messages and for transmitting subsystem messages from the second telecommunications subsystem, a first telecommunications interface (DIFS) and a second telecommunications interface (DIPS) which are connected to one another via the second telecommunications channel ($C_f$, $C_x$, $C_y$) and/or the third telecommunications channel ($C_s$, $C_x$, $C_y$),
   c) where the second telecommunications subsystem (DIIS) is involved in the first telecommunications subsystem (I-TTS) via the two telecommunications interfaces (DIFS, DIPS) as a local message transmission loop,
   d) where the first message transmission capacity is lower than the second message transmission capacity and is higher than the third message transmission capacity,
   **characterized in that** the system messages
   e) are transmitted via the first telecommunications channel (D channel) and the third telecommunications channel ($C_s$, $C_x$, $C_y$) when the volume of messages to be transmitted on the first telecommunications channel (D channel) does not exceed the volume of messages which can be transmitted on the third telecommunications channel ($C_s$, $C_x$, $C_y$),
   f) are transmitted via the first telecommunications channel (D channel) and the second telecommunications channel ($C_f$, $C_x$, $C_y$) when the volume of messages to be transmitted on the first telecommunications channel (D channel) exceeds the volume of messages which can be transmitted on the third telecommunications channel ($C_s$, $C_x$, $C_y$).

2. Method according to Claim 1, **characterized in that** transmission of the system messages in the second telecommunications subsystem is controlled such that

   a) the system messages in the telecommunications interface (DIFS) serving as a message transmission device are put into a queue,
   b) a filling level is ascertained for the queue (WSD, WSS, WSF) filled with the system messages,
   c) the third telecommunications channel ($C_s$, $C_x$, $C_y$) is stimulated to transmit the system messages when the ascertained filling level does not exceed a threshold value (SD),
   d) the second telecommunications channel ($C_f$,

$C_x$, Cy) is stimulated to transmit the system messages when the ascertained filling level exceeds the threshold value (SD).

3. Method according to Claim 2, **characterized in that** the change of channel from the second telecommunications channel ($C_f$, $C_x$, $C_y$) to the third telecommunications channel ($C_s$, $C_x$, $C_y$) is initiated when the queue (WSD, WSS, WSF) contains no system messages.

4. Method according to one of Claims 1 to 3, **characterized in that**

   a) the messages are transmitted on the second telecommunications channel ($C_f$, $C_x$, $C_y$) or on the third telecommunications channel ($C_s$, $C_x$, $C_y$),
   b) a changeover command (SWITCHING_REQUEST, ATTRIBUTE_REQUEST, SUSPEND) is transmitted which one of the two telecommunications interfaces (DIFS, DIPS) uses to signal to the other telecommunications interface (DIFS, DIPS) that the messages need to be transmitted on the third telecommunications channel ($C_s$, $C_x$, Cy) or on the second telecommunications channel ($C_f$, $C_x$, $C_y$),
   c) a changeover response (SWITCHING_CONFIRM, ATTRIBUTE_CONFIRM, RESUME) is transmitted from the telecommunications interface (DIFS, DIPS) which receives the changeover command to the telecommunications interface (DIFS, DIPS) which sends the changeover command.

5. Method according to Claim 4, **characterized in that** the changeover command (SWITCHING_REQUEST, ATTRIBUTE_REQUEST) is transmitted again if the changeover response (SWITCHING_CONFIRM, ATTRIBUTE_CONFIRM) is not transmitted after a prescribed period of time.

6. Method according to Claim 5, **characterized in that**, in the event of the changeover response (SWITCHING_CONFIRM, ATTRIBUTE_CONFIRM)being repeatedly absent, the changeover command (SWITCHING_REQUEST, ATTRIBUTE_REQUEST) continues to be transmitted for a prescribed number before control of the change of channel is terminated for unspecified [lacuna].

7. Method according to Claim 4, **characterized in that** the changeover response (SWITCHING_CONFIRM, ATTRIBUTE_CONFIRM) is a changeover confirmation which the telecommunications interface (DIFS, DIPS) receiving the changeover command uses to signal to the telecommunications interface (DIFS, DIPS) sending the changeover command that the messages are transmitted on the third telecommunications channel ($C_s$, $C_x$, $C_y$) or on the second telecommunications channel ($C_f$, $C_x$, $C_y$).

8. Method according to one of Claims 4 to 7, **characterized in that** transmission of the messages is interrupted before, during or after transmission of the changeover command (SWITCHING_REQUEST, ATTRIBUTE_REQUEST), and **in that** transmission of the messages is resumed during or after transmission of the changeover response (SWITCHING_CONFIRM, ATTRIBUTE_CONFIRM).

9. Method according to Claim 8, **characterized in that** transmission of the messages is interrupted immediately after transmission of the changeover command (SWITCHING_REQUEST, ATTRIBUTE_REQUEST), and **in that** the changeover response (SWITCHING_CONFIRM, ATTRIBUTE_CONFIRM) is transmitted essentially immediately after transmission of the changeover command (SWITCHING_REQUEST, ATTRIBUTE_REQUEST).

10. Method according to Claim 8, **characterized in that** transmission of the messages is interrupted by the telecommunications interface (DIFS, DIPS) sending the changeover command (SWITCHING_REQUEST, ATTRIBUTE_REQUEST) immediately after transmission of the changeover command (SWITCHING_REQUEST, ATTRIBUTE_REQUEST), **in that** transmission of the messages is interrupted by the telecommunications interface (DIFS, DIPS) receiving the changeover command (SWITCHING_REQUEST, ATTRIBUTE_REQUEST) essentially immediately after transmission of the changeover command (SWITCHING_REQUEST, ATTRIBUTE_REQUEST) when this telecommunications interface (DIFS, DIPS) has finally transmitted a self-contained message packet, and **in that** the changeover response (SWITCHING_CONFIRM, ATTRIBUTE_CONFIRM) is transmitted essentially immediately after transmission of the message packet.

11. Method according to Claim 8, **characterized in that** transmission of the messages is interrupted by the telecommunications interface (DIFS, DIPS) sending the changeover command (SWITCHING_REQUEST, ATTRIBUTE_REQUEST) immediately after transmission of the changeover command (SWITCHING_REQUEST, ATTRIBUTE_REQUEST), **in that** transmission of the messages is interrupted by the telecommunications interface (DIFS, DIPS) receiving the changeover command

(SWITCHING_REQUEST, ATTRIBUTE_REQUEST) essentially immediately after transmission of the changeover command (SWITCHING_REQUEST, ATTRIBUTE_REQUEST) after a prescribed period of time for confirming messages which have already been received, and **in that** the changeover response (SWITCHING_CONFIRM, ATTRIBUTE_CONFIRM) is transmitted essentially immediately after transmission of the confirmation.

12. Method according to one of Claims 4 to 11, **characterized in that**
prescribed subsystem-specific parameters are reset after transmission of the changeover response and before transmission of the system messages on the third telecommunications channel ($C_s$, $C_x$, $C_y$) or on the second telecommunications channel ($C_f$, $C_x$, $C_y$).

13. Method according to one of Claims 4 to 12, **characterized in that**
a test message with a request for confirmation is sent on the third telecommunications channel ($C_s$, $C_x$, $C_y$) or on the second telecommunications channel ($C_f$, $C_x$, $C_y$) after a change of channel.

14. Method according to Claim 13, **characterized in that**
the test message is a RECEIVE_READY report sent as a command (COMMAND) and **in that** the confirmation is a RECEIVE_READY report sent as a response (RESPONSE).

15. Method according to Claim 8, 9 or 11, **characterized in that**
a message packet comprising the messages to be transmitted which has not been transmitted completely or is unanswered as a result of the immediate interruption is retransmitted on the third tele-communications channel ($C_s$, $C_x$, $C_y$) or on the second telecommunications channel ($C_f$, $C_x$, $C_y$) after a change of channel.

16. Method according to one of Claims 4 to 15, **characterized in that**
the messages are transmitted on the basis of a prescribed transmission principle using a prescribed transmission sequence ($k = 3$), and **in that** the messages are transmitted on the third telecommunica-tions channel ($C_s$, $C_x$, $C_y$) or on the second telecom-munications channel ($C_f$, $C_x$, $C_y$) after a change of channel using the smallest possible transmission sequence ($k = 1$).

17. Method according to Claim 16, **characterized in that**
the transmission principle using the prescribed transmission sequence is the HDLC protocol for transmitting HDLC frames.

18. Method according to one of Claims 4 to 17, **characterized in that**
system messages containing user information and/or the system information and/or the subsystem information are transmitted between the telecommunications interfaces (DIFS, DIPS) of the telecommunications subsystem (DIIS) on transmission paths having different identifiers (LCNx, LCNy, LCNz).

19. Method according to Claim 18, **characterized in that**
a first transmission path having the second telecommunications channel ($C_f$) associated with it is assigned a first identifier which is not used by other transmission paths.

20. Method according to Claim 19, **characterized in that**
the first identifier is the respectively smallest allocatable identifier among the identify (LCNx, LCNy, LCNz) which identify the transmission paths.

21. Method according to Claim 19, **characterized in that**
the first identifier is the respectively largest allocatable identifier among the identifiers (LCNx, LCNy, LCNz) which identify the transmission paths.

22. Method according to one of Claims 4 to 21, **characterized in that**
the changeover command (SWITCHING_REQUEST, ATTRIBUTE_REQUEST) is transmitted by the first telecommunications interface (DIFS).

23. Method according to Claim 4 or according to Claims 4 and 8, **characterized in that**
the changeover command (SWITCHING_REQUEST, ATTRIBUTE_REQUEST) and/or the changeover response (SWITCHING_CONFIRM, ATTRIBUTE_CONFIRM) is respectively acknowledged by the respective telecommunications interface () receiving the changeover command (SWITCHING_REQUEST, ATTRIBUTE_REQUEST) or the changeover response (SWITCHING_CONFIRM, ATTRIBUTE_CONFIRM).

24. Method according to Claim 23, **characterized in that**
the changeover command (SWITCHING_REQUEST, ATTRIBUTE_REQUEST) and/or the changeover response (SWITCHING_CONFIRM, ATTRIBUTE_CONFIRM) is acknowledged with a rejection or an acceptance.

**25.** Method according to Claim 23, **characterized in that**,
if the changeover command (SWITCHING_REQUEST, ATTRIBUTE_REQUEST) or the changeover response (SWITCHING_CONFIRM, ATTRIBUTE_CONFIRM) is rejected, the telecommunications interface (DIFS, DIPS) signalling the respective rejection will initiate the change of channel by transmitting the changeover command (SWITCHING_REQUEST, ATTRIBUTE_REQUEST).

**26.** Method according to Claim 4, or Claims 4 and 8, and according to Claim 24, **characterized in that**,
if the changeover command (SWITCHING_REQUEST, ATTRIBUTE_REQUEST) and the changeover response (SWITCHING_CONFIRM, ATTRIBUTE_CONFIRM) are accepted, transmission of the messages following resumption of transmission starts at the point at which transmission has been interrupted.

**27.** Method according to Claim 4, Claims 4 and 8 or according to one of Claims 23 to 26, **characterized in that**
the changeover command (SWITCHING_REQUEST, ATTRIBUTE_REQUEST) is transmitted by a first telecommunications interface (DIFS) or a second telecommunications interface (DIPS).

**28.** Method according to Claim 4, Claims 4 and 8 or according to one of Claims 23 to 27, **characterized in that**
the changeover command (SWITCHING_REQUEST, ATTRIBUTE_REQUEST) and the changeover response (SWITCHING_CONFIRM, ATTRIBUTE_CONFIRM) are transmitted in a first message layer (DLC layer) of a message transmission structure, divided up into message layers, of the telecommunications interface (DIFS, DIPS) in which the subsystem messages are essentially transmitted.

**29.** Method according to Claim 4, Claims 4 and 8 or according to one of Claims 23 to 27, **characterized in that**
the changeover command (SWITCHING_REQUEST, ATTRIBUTE_REQUEST) and the changeover response (SWITCHING_CONFIRM, ATTRIBUTE_CONFIRM) are transmitted in a second message layer (MAC layer) which, in terms of a message transmission structure, divided into message layers, of the telecommunications interface (DIFS, DIPS), is subsidiary to a first message layer (DLC layer) provided essentially for transmitting the subsystem messages, and **in that** the changeover command (SWITCHING_REQUEST, ATTRIBUTE_REQUEST) and the changeover response (SWITCHING_CONFIRM, ATTRIBUTE_CONFIRM) are **in that** case transmitted such that the data structure of the first message layer (DLC layer) remains unimpaired.

**30.** Method according to one of Claims 1 to 29, **characterized in that**
the first telecommunications subsystem (ISDN) is an ISDN system.

**31.** Method according to Claim 30, **characterized in that**
the system messages are transmitted on the D channel.

**32.** Method according to one of Claims 1 to 31, **characterized in that**
the second telecommunications subsystem (DIIS) contains a DECT/GAP system (DGS).

**33.** Method according to one of Claims 1 to 31, **characterized in that**
the telecommunications subsystem (DIIS) contains a GSM system.

**34.** Method according to one of Claims 1 to 31, **characterized in that**
the telecommunications subsystem (DIIS) contains a PHS system, a WACS system or a PACS system.

**35.** Method according to one of Claims 1 to 31, **characterized in that**
the telecommunications subsystem (DIIS) contains an "IS-54" system or a PDC system.

**36.** Method according to one of Claims 1 to 31, **characterized in that**
the telecommunications subsystem (DIIS) contains a CDMA system, a TDMA system, an FDMA system or a hybrid - in terms of these said transmission standards - system.

**37.** Method according to Claim 32, **characterized in that**
the first telecommunications interface (DIFS) is a DECT INTERMEDIATE FIXED SYSTEM (DIFS), and the second telecommunications interface (DIPS) is a DECT INTERMEDIATE PORTABLE SYSTEM (DIPS).

**38.** Method according to Claim 32, **characterized in that**
the second telecommunications channel ($C_f$) is the $C_f$ channel of the DECT system.

**39.** Method according to Claim 32, **characterized in that**
the third telecommunications channel ($C_s$) is the $C_s$

channel of the DECT system.

**40.** Method according to one of Claims 4 to 22 and according to Claim 32, **characterized in that** the changeover command (SWITCHING_REQUEST, ATTRIBUTE_REQUEST) is the ATTRIBUTE_REQUEST information element of the DECT standard.

**41.** Method according to one of Claims 4 to 22 or Claim 40 and according to Claim 32, **characterized in that** the changeover response (SWITCHING_CONFIRM, ATTRIBUTE_CONFIRM) is the ATTRIBUTE_CONFIRM information element of the DECT standard.

**42.** Method according to Claim 4, Claims 4 and 8 or one of Claims 23 to 29 and according to Claim 32, **characterized in that** the changeover command (SWITCHING_REQUEST, ATTRIBUTE_REQUEST) is the SUSPEND information element of the DECT standard.

**43.** Method according to Claim 4, Claims 4 and 8, one of Claims 23 to 29 or Claim 42 and according to Claim 32, **characterized in that** the changeover response (SWITCHING_CONFIRM, ATTRIBUTE_CONFIRM) is the RESUME information element of the DECT standard.

**44.** Method according to Claim 28, **characterized in that** the first message layer is the DLC layer (Data Link Control) of the DECT standard.

**45.** Method according to Claim 29, **characterized in that** the second message layer is the MAC layer (Medium Access Control) of the DECT standard.

## Revendications

**1.** Procédé d'attribution de canaux de télécommunication de différentes capacités dans un système hybride de télécommunication, en particulier un système "RLL/WLL" spécifique de ISDN⇔DECT,

a) le système hybride de télécommunication comprenant pour la transmission d'informations relatives au système

a1) un premier sous-système de télécommunication (ISDN) avec un premier canal de télécommunication (canal D) et une première capacité de transmission d'informations et

a2) un deuxième sous-système de télécommunication (DIIS) avec un deuxième canal de télécommunication ($C_f$, $C_x$, $C_y$) et une deuxième capacité de transmission d'informations et avec un troisième canal de télécommunication ($C_s$, $C_x$, $C_y$) et une troisième capacité de transmission d'informations,

b) le deuxième sous-système de télécommunication (DIIS) comprenant pour la transmission d'informations relatives au système et pour la transmission d'informations relatives au sous-système du deuxième sous-système de télécommunication une première interface de télécommunication (DIFS) et une deuxième interface de télécommunication (DIPS), qui sont reliées entre elles par l'intermédiaire du deuxième canal de télécommunication ($C_f$, $C_x$, $C_y$) et/ou du troisième canal de télécommunication ($C_s$, $C_x$, $C_y$),
c) le deuxième sous-système de télécommunication (DIIS) étant intégré comme boucle locale de transmission d'informations, par l'intermédiaire des deux interfaces de télécommunication (DIFS, DIPS), dans le premier sous-système de télécommunication (I-TTS),
d) la première capacité de transmission d'informations étant inférieure à la deuxième capacité de transmission d'informations et supérieure à la troisième capacité de transmission d'informations,

**caractérisé en ce que** les informations relatives au système
e) sont transmises par l'intermédiaire du premier canal de télécommunication (canal D) et du troisième canal de télécommunication ($C_s$, $C_x$, $C_y$) si la quantité d'informations à transmettre sur le premier canal de télécommunication (canal D) ne dépasse pas la quantité d'informations pouvant être transmise sur le troisième canal de télécommunication ($C_s$, $C_x$, $C_y$),
f) sont transmises par l'intermédiaire du premier canal de télécommunication (canal D) et du deuxième canal de télécommunication ($C_f$, $C_x$, $C_y$) si la quantité d'informations à transmettre sur le premier canal de télécommunication (canal D) dépasse la quantité d'informations pouvant être transmise sur le troisième canal de télécommunication ($C_s$, $C_x$, $C_y$).

**2.** Procédé selon la revendication 1, **caractérisé en ce que** la transmission des informations relatives au système dans le deuxième sous-système de télécommunication est contrôlée de telle sorte que

a) les informations relatives au système dans l'interface de télécommunication (DIFS) servant de dispositif d'émission d'informations sont placées dans une file d'attente,

b) un taux de remplissage de la file d'attente (WSD, WSS, WSF) remplie avec les informations relatives au système est calculé,

c) le troisième canal de télécommunication ($C_s$, $C_x$, $C_y$) pour la transmission des informations relatives au système est stimulé si le taux de remplissage calculé ne dépasse pas une valeur seuil (SD),

d) le deuxième canal de télécommunication ($C_f$, $C_x$, $C_y$) pour la transmission des informations relatives au système est stimulé si le taux de remplissage calculé dépasse la valeur seuil (SD).

**3.** Procédé selon la revendication 2, **caractérisé en ce que**

le changement de canal du deuxième canal de télécommunication ($C_f$, $C_x$, $C_y$) au troisième canal de télécommunication ($C_s$, $C_x$, $C_y$) est déclenché si la file d'attente (WSD, WSS, WSF) ne contient pas d'informations relatives au système.

**4.** Procédé selon l'une des revendications 1 à 3, **caractérisé en ce que**

a) les informations sont transmises sur le deuxième canal de télécommunication ($C_f$, $C_x$, $C_y$) ou le troisième canal de télécommunication ($C_s$, $C_x$, $C_y$),

b) une demande de commutation (SWITCHING_REQUEST, ATTRIBUTE_REQUEST, SUSPEND) est transmise, par laquelle une des deux interfaces de télécommunication (DIFS, DIPS) signale à l'autre interface de télécommunication (DIFS, DIPS) que les informations doivent être transmises sur le troisième canal de télécommunication ($C_s$, $C_x$, $C_y$) resp. le deuxième canal de télécommunication ($C_f$, $C_x$, $C_y$),

c) une réponse de commutation (SWITCHING_CONFIRM, ATTRIBUTE_CONFIRM, RESUME) est transmise de l'interface de télécommunication (DIFS, DIPS) recevant la demande de commutation à l'interface de télécommunication (DIFS, DIPS) émettant la demande de commutation.

**5.** Procédé selon la revendication 4, **caractérisé en ce que**

la demande de commutation (SWITCHING_REQUEST, ATTRIBUTE_REQUEST) est transmise à nouveau si la réponse de commutation (SWITCHING_CONFIRM, ATTRIBUTE_CONFIRM) n'est pas transmise après une durée prédéfinie.

**6.** Procédé selon la revendication 5, **caractérisé en ce que**

la demande de commutation (SWITCHING_REQUEST, ATTRIBUTE_REQUEST), à défaut répétitif de la réponse de commutation, continue à être transmise avant que la commande du changement de canal soit interrompue pour une durée indéterminée.

**7.** Procédé selon la revendication 4, **caractérisé en ce que**

la réponse de commutation (SWITCHING_CONFIRM, ATTRIBUTE_CONFIRM) est une confirmation de commutation par laquelle l'interface de télécommunication (DIFS, DIPS) recevant la demande de commutation signale à l'interface de télécommunication (DIFS, DIPS) émettant la demande de commutation que les informations sont transmises sur le troisième canal de télécommunication ($C_s$, $C_x$, $C_y$) resp. le deuxième canal de télécommunication ($C_f$, $C_x$, $C_y$).

**8.** Procédé selon l'une des revendications 4 à 7, **caractérisé en ce que**

avant, avec ou après la transmission de la demande de commutation (SWITCHING_REQUEST, ATTRIBUTE_REQUEST), la transmission des informations est interrompue et qu'avec ou après la transmission de la réponse de commutation (SWITCHING_CONFIRM, ATTRIBUTE_CONFIRM), la transmission des informations est reprise.

**9.** Procédé selon la revendication 8, **caractérisé en ce que**

immédiatement après la transmission de la demande de commutation (SWITCHING_REQUEST, ATTRIBUTE_REQUEST), la transmission des informations est interrompue et que sensiblement immédiatement après la transmission de la demande de commutation (SWITCHING_REQUEST, ATTRIBUTE_REQUEST), la réponse de commutation (SWITCHING_CONFIRM, ATTRIBUTE_CONFIRM) est transmise.

**10.** Procédé selon la revendication 8, **caractérisé en ce que**

immédiatement après la transmission de la demande de commutation (SWITCHING_REQUEST, ATTRIBUTE_REQUEST), la transmission des informations par l'interface de télécommunication (DIFS, DIPS) émettant la demande de commutation (SWITCHING_REQUEST, ATTRIBUTE_REQUEST) est interrompue, que sensiblement immédiatement après la transmission de la demande de commutation (SWITCHING_REQUEST, ATTRIBUTE_REQUEST) la transmission des informations par l'interface de télécommunication (DIFS, DIPS) recevant la demande de commutation

(SWITCHING_REQUEST, ATTRIBUTE_REQUEST) est interrompue si par cette interface de télécommunication (DIFS, DIPS) un paquet complet d'informations a été finalement transmise et que sensiblement immédiatement après la transmission du paquet d'informations la réponse de commutation (SWITCHING_CONFIRM, ATTRIBUTE_CONFIRM) est transmise.

**11.** Procédé selon la revendication 8, **caractérisé en ce que**

immédiatement après la transmission de la demande de commutation (SWITCHING_REQUEST, ATTRIBUTE_REQUEST), la transmission des informations par l'interface de télécommunication (DIFS, DIPS) émettant la demande de commutation (SWITCHING_REQUEST, ATTRIBUTE_REQUEST) est interrompue, que sensiblement immédiatement après la transmission de la demande de commutation (SWITCHING_REQUEST, ATTRIBUTE_REQUEST), la transmission des informations par l'interface de télécommunication (DIFS, DIPS) recevant la demande de commutation (SWITCHING_REQUEST, ATTRIBUTE_REQUEST) est interrompue après une durée prédéfinie destinée à la confirmation des informations déjà reçues et que sensiblement immédiatement après la transmission de la confirmation, la réponse de commutation (SWITCHING_CONFIRM, ATTRIBUTE_CONFIRM) est transmise.

**12.** Procédé selon l'une des revendications 4 à 11, **caractérisé en ce que**

après la transmission de la réponse de commutation et avant la transmission des informations relatives au système sur le troisième canal de télécommunication ($C_s$, $C_x$, $C_y$) resp. le deuxième canal de télécommunication ($C_f$, $C_x$, $C_y$), des paramètres prédéfinis spécifiques du sous-système sont réinitialisés.

**13.** Procédé selon l'une des revendications 4 à 12, **caractérisé en ce que**

sur le troisième canal de télécommunication ($C_s$, $C_x$, $C_y$) resp. le deuxième canal de télécommunication ($C_f$, $C_x$, $C_y$), après un changement de canal, un message test avec demande de confirmation est émis.

**14.** Procédé selon la revendication 13, **caractérisé en ce que**

le message test est un message RECEIVE_READY émis comme demande (COMMAND) et que la confirmation est un message RECEIVE_READY émis comme réponse (RESPONSE).

**15.** Procédé selon la revendication 8, 9 ou 11, **carac-**

**térisé en ce que**

un paquet d'informations des informations à transmettre, transmis partiellement ou resté sans réponse suite à l'interruption immédiate, est transmis à nouveau sur le troisième canal de télécommunication ($C_s$, $C_x$, $C_y$) resp. le deuxième canal de télécommunication ($C_f$, $C_x$, $C_y$) après un changement de canal.

**16.** Procédé selon l'une des revendications 4 à 15, **caractérisé en ce que**

les informations sont transmises selon un principe de transmission prédéfini avec une séquence de transmission prédéfinie (k = 3) et que les informations sont transmises sur le troisième canal de télécommunication ($C_s$, $C_x$, $C_y$) resp. le deuxième canal de télécommunication ($C_f$, $C_x$, $C_y$) après un changement de canal avec une séquence de transmission minimale (k=1).

**17.** Procédé selon la revendication 16, **caractérisé en ce que**

le principe de transmission avec la séquence de transmission prédéfinie est le protocole HDLC pour la transmission de trames HDLC.

**18.** Procédé selon l'unec des revendications 4 à 17, **caractérisé en ce que**

des informations relatives au système contenant des données utiles et/ou les données relatives au système et/ou les informations relatives au sous-système entre les interfaces de télécommunication (DIFS, DIPS) du sous-système de télécommunication (DIIS) sont transmises sur des voies de transmission ayant des identifications différentes (LCNx, LCNy, LCNz).

**19.** Procédé selon la revendication 18, **caractérisé en ce que**

une première voie de transmission à laquelle est attribué le deuxième canal de télécommunication ($C_f$) se voit assigner une première identification qui n'est pas occupée par d'autres voies de transmission.

**20.** Procédé selon la revendication 19, **caractérisé en ce que**

la première identification est à chaque fois la plus petite identification assignable parmi les identifications (LCNx, LCNy, LCNz) identifiant les voies de transmission.

**21.** Procédé selon la revendication 19, **caractérisé en ce que**

la première identification est à chaque fois la plus grande identification assignable parmi les identifications (LCNx, LCNy, LCNz) identifiant les voies de transmission.

**22.** Procédé selon l'une des revendications 4 à 21, **caractérisé en ce que**

la demande de commutation (SWITCHING_REQUEST, ATTRIBUTE_REQUEST) est transmise par la première interface de télécommunication (DIFS).

**23.** Procédé selon la revendication 4 ou selon les revendications 4 et 8, **caractérisé en ce que**

la demande de commutation (SWITCHING_REQUEST, ATTRIBUTE_REQUEST) et/ou la réponse de commutation (SWITCHING_CONFIRM, ATTRIBUTE_CONFIRM) est acquittée à chaque fois par l'interface de télécommunication concernée recevant la demande de commutation (SWITCHING_REQUEST, ATTRIBUTE_REQUEST) resp. la réponse de commutation (SWITCHING_CONFIRM, ATTRIBUTE_CONFIRM).

**24.** Procédé selon la revendication 23, **caractérisé en ce que** la demande de commutation (SWITCHING_REQUEST, ATTRIBUTE_REQUEST) et/ou la réponse de commutation (SWITCHING_CONFIRM, ATTRIBUTE_CONFIRM) est acquittée avec refus ou avec acceptation.

**25.** Procédé selon la revendication 23, **caractérisé en ce que**

en cas de refus de la demande de commutation (SWITCHING_REQUEST, ATTRIBUTE_REQUEST) resp. de la réponse de commutation (SWITCHING_CONFIRM, ATTRIBUTE_CONFIRM), l'interface de télécommunication (DIFS, DIPS) signalant le refus en question va déclencher le changement de canal avec la transmission de la demande de commutation (SWITCHING_REQUEST, ATTRIBUTE_REQUEST).

**26.** Procédé selon la revendication 4 ou les revendications 4 et 8 et selon la revendication 24, **caractérisé en ce que**

en cas d'acceptation de la demande de commutation (SWITCHING_REQUEST, ATTRIBUTE_REQUEST) et de la réponse de commutation (SWITCHING_CONFIRM, ATTRIBUTE_CONFIRM), la transmission des informations, après la reprise de la transmission, débute au point où la transmission a été interrompue.

**27.** Procédé selon la revendication 4, les revendications 4 et 8 ou selon l'une des revendications 23 à 26, **caractérisé en ce que**

la demande de commutation (SWITCHING_REQUEST, ATTRIBUTE_REQUEST) est transmise par une première interface de télécommunication (DIFS) ou une deuxième interface de télécommunication (DIPS).

**28.** Procédé selon la revendication 4, les revendications 4 et 8 ou selon l'une des revendications 23 à 27, **caractérisé en ce que**

la demande de commutation (SWITCHING_REQUEST, ATTRIBUTE_REQUEST) et la réponse de commutation (SWITCHING_CONFIRM, ATTRIBUTE_CONFIRM) sont transmises dans une première couche de transmission d'informations (couche DLC) d'une structure de transmission d'informations divisée en couches de transmission d'informations de l'interface de télécommunication (DIFS, DIPS), dans laquelle sont transmises essentiellement les informations relatives au sous-système.

**29.** Procédé selon la revendication 4, les revendications 4 et 8 ou selon l'une des revendications 23 à 27, **caractérisé en ce que**

la demande de commutation (SWITCHING_REQUEST, ATTRIBUTE_REQUEST) et la réponse de commutation (SWITCHING_CONFIRM, ATTRIBUTE_CONFIRM) sont transmises dans une deuxième couche de transmission d'informations (couche MAC) qui par rapport à une structure de transmission d'informations divisée en couches de transmission d'informations de l'interface de télécommunication (DIFS, DIPS) est subordonnée à une première couche de transmission d'informations (couche DLC) prévue essentiellement pour la transmission des informations relatives au sous-système, et que la demande de commutation (SWITCHING_REQUEST, ATTRIBUTE_REQUEST) et la réponse de commutation (SWITCHING_CONFIRM, ATTRIBUTE_CONFIRM) sont transmises de telle sorte que la structure de données de la première couche de transmission d'informations (couche DLC) reste intacte.

**30.** Procédé selon l'une des revendications 1 à 35, **caractérisé en ce que**

le premier sous-système de télécommunication (ISDN) est un système ISDN.

**31.** Procédé selon la revendication 30, **caractérisé en ce que**

les informations relatives au système sont transmises sur le canal D.

**32.** Procédé selon l'une des revendications 1 à 31, **caractérisé en ce que**

le deuxième sous-système de télécommunication (DIIS) contient un système DECT-GAP (DGS).

**33.** Procédé selon l'une des revendications 1 à 31, **caractérisé en ce que**

le sous-système de télécommunication (DIIS) contient un système GSM.

**34.** Procédé selon l'une des revendications 1 à 31, **caractérisé en ce que**

le sous-système de télécommunication (DIIS) contient un système PHS, un système WACS ou un système PACS.

**35.** Procédé selon l'une des revendications 1 à 31, **caractérisé en ce que**

le sous-système de télécommunication (DIIS) contient un système "IS-54" ou un système PDC.

**36.** Procédé selon l'une des revendications 1 à 31, **caractérisé en ce que**

le sous-système de télécommunication (DIIS) contient un système CDMA, un système TDMA, un système FDMA ou un système hybride par rapport à ces standards de transmission cités.

**37.** Procédé selon la revendication 32, **caractérisé en ce que**

la première interface de télécommunication (DIFS) est un DECT INTERMEDIATE FIXED SYSTEM (DIFS) et la deuxième interface de télécommunication (DIPS) un DECT INTERMEDIATE PORTABLE SYSTEM (DIPS).

**38.** Procédé selon la revendication 32, **caractérisé en ce que**

le deuxième canal de télécommunication ($C_f$) est le canal $C_f$ du système DECT.

**39.** Procédé selon la revendication 32, **caractérisé en ce que**

le troisième canal de télécommunication ($C_s$) est le canal $C_s$ du système DECT.

**40.** Procédé selon l'une des revendications 4 à 22 et selon la revendication 32, **caractérisé en ce que**

la demande de commutation (SWITCHING_REQUEST, ATTRIBUTE_REQUEST) est l'élément d'information ATTRIBUTE_REQUEST du standard DECT.

**41.** Procédé selon l'une des revendications 4 à 22 ou la revendication 40 et selon la revendication 32, **caractérisé en ce que**

la réponse de commutation (SWITCHING_CONFIRM, ATTRIBUTE_CONFIRM) est l'élément d'information ATTRIBUTE_CONFIRM du standard DECT.

**42.** Procédé selon la revendication 4, les revendications 4 et 8 ou l'une des revendications 23 à 29 et selon la revendication 32, **caractérisé en ce que**

la demande de commutation (SWITCHING_REQUEST, ATTRIBUTE_REQUEST) est l'élément d'information SUSPEND du standard DECT.

**43.** Procédé selon la revendication 4, les revendications 4 et 8, l'une des revendications 23 à 29 ou la revendication 42 et selon la revendication 32, **caractérisé en ce que**

la réponse de commutation (SWITCHING_CONFIRM, ATTRIBUTE_CONFIRM) est l'élément d'information RESUME du standard DECT.

**44.** Procédé selon la revendication 28, **caractérisé en ce que**

la première couche de transmission d'informations est la couche DLC (**D**ata **L**ink **C**ontrol) du standard DECT.

**45.** Procédé selon la revendication 29, **caractérisé en ce que**

la deuxième couche de transmission d'informations est la couche MAC (**M**edium **A**ccess **C**ontrol) du standard DECT.

## FIG 1

RLL/WLL-Telekommunikationsteilsystem RW-TTS

DECT/ISDN Intermediate System DIIS

DECT-Luftschnittstelle

DIFS

DIPS

Telekommunika-tionssystem

Netzabschluß

Schnittstellen-schaltung

Anpassungs-einheit

Funk-Festteil

RFP

RPP

Funk-Mobilteil

Anpassungs-einheit

Schnittstellen-schaltung

Endgerät

Benutzer

ISDN

NT

INC1

IWU1

IWU2

INC2

TE

TCU

U-Schnittstelle

S-Schnittstelle (S-BUS)

DECT/GAP-System DGS

S-Schnittstelle (S-BUS)

ISDN-Telekommunikationsteilsystem I-TTS

ISDN-Telekommunikationsteilsystem I-TTS

"ISDN ←→ DECT-spezifisches RLL/WLL"-Telekommunikationssystem IDRW-TS

EP 0 891 680 B1

**160ms**

| | 0 | 1 | 2 | 3 | 4 | 5 | 6 | 7 | 8 | 9 | 10 | 11 | 12 | 13 | 14 | 15 | |
|---|---|---|---|---|---|---|---|---|---|---|---|---|---|---|---|---|---|
| Multi-Zeitrahmen MZR | PN | MCN | PN | MCN | PN | MCN | PN | MCN | Q | MCN | PN | MCN | PN | MCN | N | MCN | } Basisstation RFP |
| | MCN | N | MCN | N | MCN | N | MCN | N | MCN | N | MCN | N | MCN | N | MCN | N | } Mobilteil RPP |

**10ms** — RFP → RPP — RPP → RFP

| Zeitrahmen ZR | Zeitschlitz 0 | Zeitschlitz 1 | | | Zeitschlitz 11 | Zeitschlitz 12 | Zeitschlitz 13 | | Zeitschlitz 23 |
|---|---|---|---|---|---|---|---|---|---|

**417µs**

| Zeitschlitz ZS | 32Bit / 28µs | 388Bit / 337µs | 4Bit / 3µs | 56Bit / 49µs |
|---|---|---|---|---|
| | Sync-Feld | D-Feld | Z-Feld | Guard-Time |

| D-Feld | 64Bit / 56µs | 320Bit / 278µs | 4Bit / 3µs |
|---|---|---|---|
| | A-Feld | B-Feld | X-CRC |

| A-Feld | 8Bit | 40Bit | 16Bit |
|---|---|---|---|
| | Header | C-/Q-/M-/N-/P-Kanaldaten | A-CRC |

**FIG 2**

**FIG 3**

ISDN       DIFS       DIPS       TE

| ISDN-Schicht 3 | | |
| ISDN-Schicht 2 | | |
| ISDN-Schicht 1 | | |

IWU-Schicht

| ISDN-Schicht 2 | NWK-Schicht |
| | DLC-Schicht |
| | MAC-Schicht |
| ISDN-Schicht 1 | PH-Schicht |

IWU-Schicht

| NWK-Schicht | ISDN-Schicht 2 |
| DLC-Schicht | |
| MAC-Schicht | |
| PH-Schicht | ISDN-Schicht 1 |

| Applika-tionen |
| ISDN-Schicht 3 |
| ISDN-Schicht 2 |
| ISDN-Schicht 1 |

DECT-Luftschnittstelle

EP 0 891 680 B1

# FIG 4

| ISDN | DIFS | | DIPS | | TE |
|---|---|---|---|---|---|
| | IWU-Schicht | | IWU-Schicht | | |
| Sprach-darstellungs-schicht z.B. PCM | Sprach-darstellungs-schicht z.B. PCM | Sprach-darstellungs-schicht z.B. ADPCM | Sprach-darstellungs-schicht z.B. ADPCM | Sprach-darstellungs-schicht z.B. PCM | Sprach-darstellungs-schicht z.B. PCM |
| | | | | | |
| | | | | | |
| | | DLC-Schicht | DLC-Schicht | | |
| | | MAC-Schicht | MAC-Schicht | | |
| ISDN-Schicht 1 | ISDN-Schicht 1 | PH-Schicht | PH-Schicht | ISDN-Schicht 1 | ISDN-Schicht 1 |

DECT-Luftschnittstelle

EP 0 891 680 B1

## FIG 5

```
┌─────────────────────────────────────────────────┐
│                IWU-Schicht                        │
│                NWK-Schicht                        │
└─────────────────────────────────────────────────┘
```

Lower Layer Management Entity LLME

DLC-Schicht

DATA LINK SERVICE

C-PLANE ROUTER

DLC-Layer entity       C-Plane              Protocol

$C_f$-Kanal          $C_S$-Kanal          $C_S$-Kanal

| Multi Bearer Control MBC mit der Logical Connection Number LCNx, LCN0 | Multi Bearer Control MBC mit der Logical Connection Number LCNy, LCN1 | Multi Bearer Control MBC mit der Logical Connection Number LCNz, LCN2 |

| Trafic Bearer Control TBC | Trafic Bearer Control TBC | Trafic Bearer Control TBC |

MAC-Schicht

# FIG 6

EP 0 891 680 B1

**Empfangsteil**

DIPS ← — — — — — — — — — — — — — — — — — — DIFS
DIFS ← — — — — — — — — — — — — — — — — — — DIPS

$C_S$-Kanal

NWK-
DLC- } Schicht
MAC-

$C_f$-Kanal

DECT-   ISDN-
Nachrichten

**Sendesteil**

WSS

$C_S$-Kanal

MAC-
Schicht

$C_f$-Kanal

WSF

WSD   SD

DLC-
Schicht

NWK-
Schicht

DECT-
ISDN-
Nachrichten

MAC-/DLC-
Steuereinrichtung

STE

**FIG 7**

DECT Intermediate Fixed System    DECT Intermediate Portable System
DIFS                              DIPS

DLC-PDU C$_S$-Kanal

Aufbau des C$_f$-Kanals

SUSPEND

RECEIVE_READY

SUSPEND_ACKNOWLEDGE

RESUME

RESUME_ACKNOWLEDGE

Fortsetzung DLC-PDU

Zeit für Transfer von DLC-Parametern,
DLC-Daten zur fortsetzenden Instanz.

Zeit für Transfer von DLC-
Parametern und DLC-Daten
zur fortsetzenden Instanz.

EP 0 891 680 B1

# FIG 8

DIFS                                     DIPS

DLC-PDU C$_S$-Kanal

RECEIVE_READY

SUSPEND

erste Warteschlange WSD und
dritte Warteschlange WSF leer

SUSPEND_REJECT

I-Rahmen

RECEIVE_READY

erste Warteschlange WSD und          SUSPEND
dritte Warteschlange WSF leer

SUSPEND_ACKNOWLEDGE

RESUME

RESUME_ACKNOWLEDGE

Fortsetzung auf C$_S$-Kanal

EP 0 891 680 B1

## FIG 9

DECT Intermediate Fixed System     DECT Intermediate Portable System

DIFS               DIPS

DLC-PDU $C_S$-Kanal

Aufbau des $C_f$-Kanals

n-tes I-Rahmen-Fragment

UMSCHALTUNG

n-tes I-Rahmen-Fragment

UMSCHALTUNG verstanden, Akzept

Akzept verstanden

Zeit für Transfer von DLC-Parametern und DLC-Daten zur fortsetzenden Instanz.

FORTSETZUNG

Zeit für Transfer von DLC-Parametern und DLC-Daten zur fortsetzenden Instanz.

FORTSETZUNG verstanden

FORTSETZUNG akzeptiert

kann entfallen, wenn die Meldung "FORTSETZUNG" schnell nach wenigen Zyklen erwartet werden kann.

Akzept verstanden

FORTSETZUNG

(n+1)-tes I-Rahmen-Fragment

**FIG 10**

DECT Intermediate Fixed System    DECT Intermediate Portable System

DIFS                               DIPS

DL-PDU's $C_f$-Kanal

UMSCHALTUNG auf $C_S$-Kanal

Rückweisung, da das DIFS noch den $C_f$-Kanal benötigt.

erste Warteschlange WSD und dritte Warteschlange WSF leer

UMSCHALTUNG: verstanden, Rückweisung

Rückweisung: verstanden

I-Rahmen

RECEIVE_READY

erste Warteschlange WSD und dritte Warteschlange WSF leer

UMSCHALTUNG

UMSCHALTUNG: verstanden, akzeptiert

FORTSETZUNG

FORTSETZUNG: verstanden, akzeptiert

DL-PDU auf dem $C_S$-Kanal

EP 0 891 680 B1

# FIG 11a

DECT Intermediate Fixed System    DECT Intermediate Portable System

DIFS    DIPS

Der Kanal $C_x$ wird für Informationsübertragungen auf der C-Ebene (C-plane) verwendet.

Das DIFS erkennt die Notwendigkeit auf einen C-Kanal $C_y$ zu wechseln.

Das DIFS kann mit der Meldung "RECEIVE_READY" alle unbestätigten, vollständig empfangenen I-Rahmen (Informationen nach dem HDLC-Protokoll) bestätigen, falls kein weiterer I-Rahmen gesendet wird.

Vor, mit oder nach der Übertragung der Meldung "SWITCHING_REQUEST" kann die DIFS vorzugsweise die Informations-übertragung auf der C-Ebene unterbrechen.

Kanal $C_x$

[Übertragungsweg mit LCNx; k=3]

Kanal $C_y$

[Übertragungsweg mit LCNy; wobei LCNx≠LCNy]

RECEIVE_READY (RESPONSE)

[I-Rahmen; k=3]

SWITCHING_REQUEST

[Anfrage von Kanal $C_x$ auf Kanal $C_y$ zu wechseln]

Der Kanal $C_x$ wird für Informationsübertragungen auf der C-Ebene (C-plane) verwendet.

Nach oder mit Erhalt der Meldung "SWITCHING_REQUEST" wird das DIPS vorzugsweise alle unvollständig empfangenen I-Rahmen löschen.

EP 0 891 680 B1

# FIG 11b

DECT Intermediate Fixed System    DECT Intermediate Portable System

DIFS            DIPS

Falls der Sender frei ist, kann das DIPS mit der Meldung "RECEIVE_READY" alle unbestätigten, vollständig empfangenen I-Rahmen (Informationen nach dem HDLC-Protokoll) bestätigen.

RECEIVE_READY (RESPONSE)

[I-Rahmen; k=3]

Das DIFS wird mit oder nach Erhalt der Meldung "SWITCHING_CONFIRM" vorzugsweise alle unbestätigten und unvollständig empfangenen I-Rahmen löschen.

SWITCHING_CONFIRM

[Bestätigung des Wechsels von Kanal $C_x$ auf Kanal $C_y$]

Das DIPS wird vorzugsweise alle Informationsübertragungen auf der C-Ebene unterbrechen und mit der Meldung "SWITCHING_CONFIRM" auf die Meldung "SWITCHING_REQUEST" im Sinne einer Bestätigung antworten.

Zurücksetzung von teilsystemspezifischen Parametern

Der Kanal $C_y$ wird für die Informationsübertragungen auf der C-Ebene verwendet.

Testnachricht [k=1; k=3]

Übertragung der gelöschten Informationen [k=1; k=3]

Der Kanal $C_y$ wird für die Informationsübertragungen auf der C-Ebene verwendet.

EP 0 891 680 B1

# FIG 12

**DECT Intermediate Fixed System**     **DECT Intermediate Portable System**

DIFS          DIPS

Der Kanal $C_f$ wird für Informationsübertragungen auf der C-Ebene verwendet.

Kanal $C_f$
[Übertragungsweg mit LCN0]

Kanal $C_S$ + U-Ebene
[Übertragungsweg mit LCN1]

Der Kanal $C_S$ wird für Informationsübertragungen auf der C-Ebene nicht verwendet. Es wird aber U-Ebene genutzt.

Das DIFS erkennt, daß der Kanal $C_f$ nicht mehr notwendig ist. Die LLME weiß, daß auf dem Übertragungsweg mit der LCN1 eine MAC-Verbindung besteht.

ATTRIBUTES_T_REQUEST
[LCN1, kein Kanal $C_f$]

Der TBC fragt die LLME nach der MAC-Verbindung auf dem Übertragungsweg mit der LCN1. Da diese besteht, kann der Wechsel erfolgen.

Die LLME speichert die LCN1. Der Kanal $C_S$ wird für die Informationsübertragung auf der C-Ebene verwendet.

ATTRIBUTES_T_CONFIRM
[LCN1, kein Kanal $C_f$]

Die LLME speichert die LCN. Der Kanal $C_S$ wird für die Informationsübertragung auf der C-Ebene verwendet.

Der Übertragungsweg mit der LCN0 ist nicht mehr erforderlich.

RELEASE

Kanal $C_S$
[Übertragungsweg mit LCN1]

EP 0 891 680 B1

# FIG 13

DECT Intermediate Fixed System    DECT Intermediate Portable System

DIFS                              DIPS

Der Kanal $C_S$ wird für Informationsübertragungen auf der C-Ebene verwendet.
Zusätzlich wird noch die U-Ebene genutzt.

**Kanal $C_S$ + U-Ebene**
[Übertragungsweg mit LCN1]

**Kanal $C_{S'}$ + U-Ebene**
[Übertragungsweg mit LCN2]

Der Kanal $C_{S'}$ wird für
Informationsübertragungen auf
der C-Ebene nicht genutzt.
Es wird aber die U-Ebene verwendet.

Das DIFS erkennt, daß der Kanal $C_f$
nicht mehr notwendig ist. Die LLME weiß,
daß auf dem Übertragungsweg mit
der LCN2 eine MAC-Verbindung besteht.

**ATTRIBUTES_T_REQUEST**
[LCN2, kein Kanal $C_f$]

Der TBC fragt die LLME nach der
MAC-Verbindung auf dem Übertragungsweg mit der LCN2. Da diese
besteht, kann der Wechsel erfolgen.

Die LLME speichert die LCN2.
Der Kanal $C_{S'}$ wird für die Informationsübertragung auf der C-Ebene verwendet.

**ATTRIBUTES_T_CONFIRM**
[LCN2, kein Kanal $C_f$]

Die LLME speichert die LCN.
Der Kanal $C_{S'}$ wird für die
Informationsübertragung
auf der C-Ebene verwendet.

Der Übertragungsweg mit der LCN
ist nicht mehr erforderlich.

**RELEASE**

**Kanal $C_{S'}$**
[Übertragungsweg mit LCN2]

EP 0 891 680 B1

# FIG 14a

DECT Intermediate Fixed System     DECT Intermediate Portable System

DIFS                      DIPS

Der Kanal $C_S$ wird für Informationsübertragungen auf der C-Ebene verwendet.
Zusätzlich wird die U-Ebene genutzt.

**Kanal $C_S$ + U-Ebene**

[Übertragungsweg mit LCN1]

Das DIFS erkennt, daß ein Kanal $C_f$
erforderlich ist. Die LLME weiß, daß kein
Übertragungsweg mit einer LCN
für den Kanal $C_f$ besteht.

**ATTRIBUTES_T_REQUEST**

[LCN0, Kanal $C_f$]

Der TBC fragt die LLME nach einer
MAC-Verbindung auf dem Übertragungsweg mit LCN0. Da diese
nicht besteht, baut der LLME den
Übertragungsweg mit der LCN auf.

**BEARER_REQUEST**

[LCN0, Kanal $C_f$]

**BEARER_CONFIRM**

[LCN0, Kanal $C_f$]

weitere Meldungen

weitere Meldungen

Aufbau des Übertragungsweges mit LCN0 zur Informationsübertragung auf C-Ebene mit einem Kanal $C_f$

EP 0 891 680 B1

## FIG 14b

DECT Intermediate Fixed System          DECT Intermediate Portable System

DIFS                                                    DIPS

ATTRIBUTES_T_REQUEST
[LCNO, Kanal $C_f$]

Der TBC fragt die LLME nach
MAC-Verbindung auf dem Übertragungsweg mit der LCNO. Da diese
ja besteht, kann der Wechsel erfolgen.

Die LLME speichert die LCNO. Der Kanal $C_f$
wird für die Informationsübertragungen
auf der C-Ebene verwendet.

ATTRIBUTES_T_CONFIRM
[LCNO, Kanal $C_f$]

Die LLME speichert die LCN.
Der Kanal $C_f$ wird für die
Informationsübertragungen
auf der C-Ebene verwendet.

Kanal $C_f$
[Übertragungsweg mit LCNO]

EP 0 891 680 B1

# FIG 15a

DECT Intermediate Fixed System    DECT Intermediate Portable System

DIFS    DIPS

Der Kanal $C_S$ wird für Informationsübertragungen auf der C-Ebene verwendet.
Zusätzlich wird die U-Ebene genutzt.

Kanal $C_S$ + U-Ebene

[Übertragungsweg mit LCN1]

Das DIPS erkennt, daß ein Kanal $C_f$
erforderlich ist und baut den Übertragungsweg mit der LCN0 auf.

BEARER_REQUEST

[LCN0, Kanal $C_f$]

BEARER_CONFIRM

[LCN0, Kanal $C_f$]

weitere Meldungen

weitere Meldungen

Aufbau des Übertragungsweges mit LCN0 zur Informationsübertragung auf C-Ebene mit einem Kanal $C_f$

EP 0 891 680 B1

# FIG 15b

**DECT Intermediate Fixed System**     **DECT Intermediate Portable System**

DIFS             DIPS

Das DIFS erkennt, daß das DIPS den $C_f$-Kanal benötigt.

ATTRIBUTES_T_REQUEST
[LCNO, Kanal $C_f$]

Der TBC fragt die LLME nach der MAC-Verbindung auf dem Über-tragungsweg mit der LCNO.
Da diese jetzt besteht,
kann der Wechsel erfolgen.

Die LLME speichert die LCNO. Der Kanal $C_f$ wird für die Informationsübertragungen auf der C-Ebene verwendet.

ATTRIBUTES_T_CONFIRM
[LCNO, Kanal $C_f$]

Die LLME speichert die LCNO.
Der Kanal $C_f$ wird für die Informationsübertragungen
auf der C-Ebene verwendet.

Kanal $C_f$
[Übertragungsweg mit LCNO]

EP 0 891 680 B1